# EUROPEAN PATENT SPECIFICATION

(11) **EP 4 269 813 B1**
(45) Date of publication and mention of the grant of the patent: **17.12.2025**
(21) Application number: 21918205.2
(22) Date of filing: 12.01.2021
(51) Int. Cl.: F15B 21/04, F15B 21/02

(54) **HYDRAULIC BRAKE SYSTEM AND GAS DISCHARGE CONTROL METHOD THEREFOR, CONTROLLER, AND VEHICLE**
HYDRAULISCHES BREMSSYSTEM UND GASENTLADUNGSSTEUERUNGSVERFAHREN DAFÜR, STEUERGERÄT UND FAHRZEUG
SYSTÈME DE FREIN HYDRAULIQUE ET PROCÉDÉ DE COMMANDE D'ÉVACUATION DE GAZ ASSOCIÉ, DISPOSITIF DE COMMANDE ET VÉHICULE

(43) Date of publication of application: 01.11.2023
(73) Proprietor: Shenzhen Yinwang Intelligent Technologies Co., Ltd., Shenzhen, Guangdong 518129 (CN)
(72) Inventor: MA, Wentao, Shenzhen, Guangdong 518129 (CN); ZHANG, Yongsheng, Shenzhen, Guangdong 518129 (CN); LING, Mingze, Shenzhen, Guangdong 518129 (CN)
(74) Representative: Maiwald GmbH
(86) International application number: PCT/CN2021/071330
(87) International publication number: WO 2022/150987

(56) References cited:
- CN-A- 109 693 655
- CN-U- 207 212 839
- CN-U- 207 212 839
- DE-A1- 10 138 125
- DE-A1- 102015 224 888
- DE-A1- 102015 224 888
- DE-A1- 3 935 353
- JP-A- S6 456 260

## Description

### TECHNICAL FIELD

This invention relates to the field of electronic technologies in the field of automobiles, and in particular, to a hydraulic brake system, an exhaust control method thereof, a controller, and a vehicle.

### BACKGROUND

A brake system of a vehicle is generally a hydraulic brake system. The hydraulic brake system can transfer, through brake fluid, pressure of a driver stepping on a brake pedal, so as to implement braking of the vehicle. Because liquid is incompressible and gas can be compressed, to achieve effective pressure transfer, it is necessary to ensure that the hydraulic brake system is a system full of brake fluid and free of gas.

In scenarios such as vehicle manufacturing, vehicle development and commissioning, and vehicle brake system maintenance, gas may enter the hydraulic brake system. Therefore, to avoid affecting braking performance of the vehicle, gas needs to be exhausted from the hydraulic brake system in time. When performing exhaust on the hydraulic brake system, an operator needs to step on the brake pedal and open an exhaust port of a brake wheel cylinder to exhaust the gas in the hydraulic brake system from the exhaust port.

However, because a wire-controlled brake system of a future vehicle (for example, an autonomous vehicle) does not require a manual operation, a manner of manually stepping on a brake pedal to perform exhaust is not applicable to the wire-controlled brake system of the future vehicle.

German patent application DE 101 38 125 A1 describes a gas venting method for an automobile hydraulic braking system.

German patent application DE 10 2015 224888 A1 describes a method and an electronic service device for venting the brake system of a motor vehicle.

Chinese utility patent CN 207 212 839 U describes a braking hydraulic pressure pipeline exhaust method.

### SUMMARY

This invention provides a hydraulic brake system, an exhaust method thereof, a controller, and a vehicle, so as to solve a problem that a manner of manually stepping on a brake pedal to perform exhaust is not applicable to a wire-controlled brake system.

In one aspect, this invention provides a hydraulic brake system. The hydraulic brake system includes a pressurizing assembly, a brake fluid transmission assembly, a brake control assembly, and a controller. The pressurizing assembly includes a motor, a piston, and a pressurizing cylinder. The motor is separately connected to a first end of the piston and the controller, a second end of the piston is located in the pressurizing cylinder, and the pressurizing cylinder is separately connected to the brake fluid transmission assembly and a reservoir. The brake fluid transmission assembly is further separately connected to the brake control assembly, the controller, and a brake assembly. The controller is configured to control the pressurizing assembly to output brake fluid to the brake fluid transmission assembly and control the brake fluid transmission assembly to alternatively connect the pressurizing cylinder to the brake control assembly and the brake assembly based on an exhaust instruction, so as to exhaust gas in the assembly connected to the pressurizing cylinder.

Because the controller can control the pressurizing assembly and the brake fluid transmission assembly to automatically perform an exhaust operation, and the exhaust process does not require manually stepping on a brake pedal, the controller is applicable to a wire-controlled brake system of a future vehicle (for example, an autonomous vehicle). Moreover, because the pressurizing assembly is realized by using the motor, the piston and the pressurizing cylinder, fine control of an outlet amount of the brake fluid can be realized to ensure exhaust effect.

Optionally, the controller is configured to: control the motor to drive the piston to move in a first direction in the pressurizing cylinder, so as to suck the brake fluid from the reservoir into the pressurizing cylinder, or control the motor to drive the piston to move in a second direction in the pressurizing cylinder, so as to output the brake fluid in the pressurizing cylinder to the brake fluid transmission assembly, where the first direction is opposite to the second direction.

The motor drives the piston to move to suck the brake fluid into the pressurizing cylinder or remove the brake fluid from the pressurizing cylinder. This ensures stable execution of the suction process and the exhaust process. Random errors and misoperations caused by manually stepping on the brake pedal can be avoided. In addition, fine control of an inlet amount and the outlet amount of the brake fluid can be realized to ensure the exhaust effect.

Optionally, the second end of the piston divides the pressurizing cylinder into a first cavity and a second cavity, and both the first cavity and the second cavity are connected to the reservoir. The brake control assembly includes a brake pedal and a master cylinder connected to the brake pedal. The brake fluid transmission assembly includes a first transmission subassembly, a second transmission subassembly, a third transmission subassembly, a fourth transmission subassembly, and a fifth transmission subassembly. The first transmission subassembly is separately connected to the first cavity, the third transmission subassembly, and the fourth transmission subassembly, the second transmission subassembly is separately connected to the second cavity, the third transmission subassembly, and the fourth transmission subassembly, the third transmission subassembly is further separately connected to the fourth transmission subassembly and the master cylinder, the fourth transmission subassembly is further connected to the brake assembly, and the fifth transmission subassembly is connected to the reservoir and the brake assembly. The controller is configured to: control the motor to drive the piston to move in the first direction in the pressurizing cylinder, control the second transmission subassembly, the fourth transmission subassembly, and the fifth transmission subassembly to be connected, and control the first transmission subassembly to be disconnected; or control the motor to drive the piston to move in the second direction in the pressurizing cylinder, control the first transmission subassembly to be connected, and control the third transmission subassembly or the fourth transmission subassembly to be connected.

In a process of controlling the motor to drive the piston to move in the first direction in the pressurizing cylinder, the controller controls the second transmission subassembly, the fourth transmission subassembly, and the fifth transmission subassembly to be connected, so that the brake fluid in the reservoir flows into the pressurizing cylinder, to achieve liquid replenishment of the pressurizing cylinder. In addition, because the first transmission subassembly is disconnected in the process, air can be prevented from entering the pressurizing cylinder through the first transmission subassembly.

In a process in which the controller controls the motor to drive the piston to move in the second direction in the pressurizing cylinder, if the controller controls the first transmission subassembly and the third transmission subassembly to be connected, exhaust for the brake control assembly may be implemented; or if the controller controls the first transmission subassembly and the fourth transmission subassembly to be connected, exhaust for the brake assembly may be implemented.

Optionally, if the exhaust instruction is an exhaust instruction for the brake control assembly, the controller is configured to: control the motor to drive the piston to move in the second direction in the pressurizing cylinder, control the first transmission subassembly and the third transmission subassembly to be connected, and control the fourth transmission subassembly to be disconnected.

Disconnecting the fourth transmission subassembly when performing exhaust on the brake control assembly may prevent the brake fluid from being diverted by the fourth transmission subassembly, so as to ensure that sufficient brake fluid is pressed into the brake control assembly.

Optionally, the brake control assembly further includes a sixth transmission subassembly. The master cylinder includes a front cavity and a rear cavity, where the front cavity is closer to the brake pedal than the rear cavity, the front cavity is connected to the reservoir by using the sixth transmission subassembly, and the rear cavity is connected to the reservoir. The third transmission subassembly includes a first wheel cylinder control valve and a second wheel cylinder control valve, where the first wheel cylinder control valve is separately connected to the front cavity, the first transmission subassembly and the fourth transmission subassembly, and the second wheel cylinder control valve is separately connected to the rear cavity, the first transmission subassembly, and the fourth transmission subassembly. The controller is configured to: control the motor to drive the piston to move in the second direction in the pressurizing cylinder, and perform at least one of the following operations: controlling the first transmission subassembly, the first wheel cylinder control valve, the second wheel cylinder control valve, and the sixth transmission subassembly to be connected, and controlling the fourth transmission subassembly to be disconnected; controlling the first transmission subassembly and the second wheel cylinder control valve to be connected, and controlling the first wheel cylinder control valve and the fourth transmission subassembly to be disconnected; controlling the first transmission subassembly, the first wheel cylinder control valve, and the sixth transmission subassembly to be connected, and controlling the second wheel cylinder control valve and the fourth transmission subassembly to be disconnected; and controlling the first transmission subassembly and the first wheel cylinder control valve to be connected, and controlling the second wheel cylinder control valve, the fourth transmission subassembly, and the sixth transmission subassembly to be disconnected.

According to the solution provided in this invention, exhaust can be performed on the master cylinder in a plurality of different manners, thereby effectively improving exhaust flexibility. In addition, there may be a case in which gas enters only the front cavity or the rear cavity of the master cylinder. In this case, the solution provided in this invention may be used, and exhaust is separately performed on only one cavity into which the gas enters, of the master cylinder. This not only achieves precise and efficient exhaust, but also avoids waste of the brake fluid.

Optionally, the controller is configured to: if the exhaust instruction is an exhaust instruction for the brake assembly, control the motor to drive the piston to move in the second direction in the pressurizing cylinder, control the first transmission subassembly and the fourth transmission subassembly to be connected, and control the third transmission subassembly and the fifth transmission subassembly to be disconnected.

In a process of exhaust for the brake assembly, because the third transmission subassembly is in a disconnected state, the brake fluid may be prevented from being diverted by the third transmission subassembly. Further, it can be ensured that sufficient brake fluid is pressed into the brake assembly to ensure exhaust effect on the brake assembly.

Optionally, the brake assembly includes a plurality of brake wheel cylinders, the fourth transmission subassembly includes a plurality of liquid inlet valves connected to the plurality of brake wheel cylinders in a one-to-one correspondence, and the fifth transmission subassembly includes a plurality of liquid outlet valves connected to the plurality of brake wheel cylinders in a one-to-one correspondence. The controller is configured to: control the motor to drive the piston to move in the second direction in the pressurizing cylinder, and control a liquid inlet valve connected to at least one brake wheel cylinder to be turned on and a liquid outlet valve connected to the brake wheel cylinder to be turned off.

Based on the solution provided in this invention, the controller may control some or all of the liquid inlet valves to be turned on, to perform exhaust on some or all of the brake wheel cylinders, thereby effectively improving exhaust flexibility.

Optionally, the exhaust instruction is an exhaust instruction for at least one target brake wheel cylinder in the brake assembly. The controller is configured to: control the motor to drive the piston to move in the second direction in the pressurizing cylinder, control at least one target liquid inlet valve in the plurality of liquid inlet valves to be turned on, and control a liquid inlet valve other than the at least one target liquid inlet valve to be turned off. The at least one target liquid inlet valve is a liquid inlet valve connected to the at least one target brake wheel cylinder.

In the solution provided in this invention, the controller may, based on an indication of the exhaust instruction, perform exhaust on only a target brake wheel cylinder that is in the brake assembly and that has an exhaust requirement (namely, a wheel cylinder into which gas enters), and does not need to perform exhaust on another brake wheel cylinder that has no exhaust requirement. Thus, not only efficiency and accuracy of exhausting gas are effectively improved, but also the waste of the brake fluid can be avoided.

Optionally, the plurality of brake wheel cylinders in the brake assembly include: at least one first brake wheel cylinder and at least one second brake wheel cylinder, where the first brake wheel cylinder is separately connected to a first liquid inlet valve in the plurality of liquid inlet valves included in the fourth transmission subassembly and a first liquid outlet valve of the plurality of liquid outlet valves included in the fifth transmission subassembly; and the second brake wheel cylinder is separately connected to a second liquid inlet valve in the plurality of liquid inlet valves included in the fourth transmission subassembly and a second liquid outlet valve of the plurality of liquid outlet valves included in the fifth transmission subassembly. The second transmission subassembly includes a first liquid suction control valve and a second liquid suction control valve, where the first liquid suction control valve is separately connected to the second cavity and the first liquid inlet valve, and the second liquid suction control valve is separately connected to the second cavity and the second liquid inlet valve. The controller is configured to: control the motor to drive the piston to move in the first direction in the pressurizing cylinder, and perform at least one of the following operations: controlling the second liquid suction control valve, the second liquid inlet valve, and the second liquid outlet valve to be turned on, and controlling the first liquid suction control valve, the first liquid inlet valve, and the first liquid outlet valve to be turned off; controlling the first liquid suction control valve, the first liquid inlet valve, and the first liquid outlet valve to be turned on, and controlling the second liquid suction control valve, the second liquid inlet valve, and the second liquid outlet valve to be turned off; and controlling the first liquid suction control valve, the first liquid inlet valve, the first liquid outlet valve, the second liquid suction control valve, the second liquid inlet valve, and the second liquid outlet valve to be turned on.

In the solution provided in this invention, the controller may control, in a plurality of different manners, the pressurizing assembly to suck liquid, thereby effectively improving flexibility of sucking the liquid.

Optionally, the system further includes a pedal feel simulator. The brake fluid transmission assembly further includes a simulator control valve, where the simulator control valve is separately connected to the pedal feel simulator, the front cavity of the master cylinder, and the third transmission subassembly. The controller is further configured to: if the exhaust instruction is an exhaust instruction for the pedal feel simulator, control the motor to drive the piston to move in the second direction in the pressurizing cylinder, control the first transmission subassembly, the third transmission subassembly, and the simulator control valve to be connected, and control the fourth transmission subassembly and the sixth transmission subassembly to be disconnected; and after controlling the motor to drive the piston to move to an upper limit of a stroke in the second direction, control the third transmission subassembly to be disconnected, and control the sixth transmission subassembly to be connected.

The solution provided in this invention may further perform exhaust on the pedal feel simulator, thereby effectively improving safety and reliability of the hydraulic brake system.

Optionally, the system further includes a first pressure sensor, where the first pressure sensor is connected to an infusion pipeline between the first transmission subassembly and the fourth transmission subassembly. The controller is further configured to: after controlling the pressurizing assembly to output the brake fluid to the brake fluid transmission assembly and controlling the brake fluid transmission assembly to connect the pressurizing cylinder to the brake control assembly or the brake assembly, control the first transmission subassembly and the fourth transmission subassembly to be connected, control the third transmission subassembly and the fifth transmission subassembly to be disconnected, and control the pressurizing assembly to output brake fluid of a first target volume to the first transmission subassembly; and if it is detected that a pressure value collected by the first pressure sensor does not fall within a first pressure range corresponding to the first target volume, output a first prompt indicating that exhausting gas fails; or if it is detected that a pressure value collected by the first pressure sensor falls within a first pressure range corresponding to the first target volume, output a second prompt indicating that exhausting gas succeeds.

The controller may further detect exhaust effect based on the pressure value collected by the first pressure sensor, and output a prompt, so as to avoid a dangerous working condition caused because the exhaust operation does not meet an exhaust standard.

Optionally, the controller may be further configured to: if the brake fluid that is output by the pressurizing assembly to the first transmission subassembly is controlled to reach the first target volume, and a fluctuation amplitude that is of the pressure value collected by the first pressure sensor and that is within first target duration is less than a first amplitude threshold, detect whether the pressure value collected by the first pressure sensor falls within the first pressure range; or if the brake fluid that is output by the pressurizing assembly to the first transmission subassembly is controlled to reach the first target volume, and a fluctuation amplitude that is of the pressure value collected by the first pressure sensor and that is within first target duration is not less than a first amplitude threshold, output a third prompt indicating poor air tightness.

The controller detects the air tightness of the infusion pipeline through the fluctuation amplitude of the pressure value, and outputs the third prompt when the air tightness is poor, so that an operator can detect and maintain the infusion pipeline in time.

Optionally, the system further includes a second pressure sensor, where the second pressure sensor is connected to an infusion pipeline between the third transmission subassembly and the front cavity of the master cylinder. The controller is further configured to: after controlling the pressurizing assembly to output the brake fluid to the brake fluid transmission assembly and controlling the brake fluid transmission assembly to connect the pressurizing cylinder to the brake control assembly or the brake assembly, control the first transmission subassembly and the first wheel cylinder control valve of the third transmission subassembly to be connected, control the fourth transmission subassembly and the sixth transmission subassembly to be disconnected, and control the pressurizing assembly to output brake fluid of a second target volume to the first transmission subassembly; and if it is detected that a pressure value collected by the second pressure sensor does not fall within a second pressure range corresponding to the second target volume, output a first prompt indicating that exhausting gas fails; or if it is detected that a pressure value collected by the second pressure sensor falls within a second pressure range corresponding to the second target volume, output a second prompt indicating that exhausting gas succeeds.

In the solution provided in this invention, because the pressurizing assembly is implemented by using the motor, the piston, and the pressurizing cylinder, precise control of an outlet amount of the brake fluid can be implemented. Further, a pressure value collected by a pressure sensor can be used to accurately detect exhaust effect, so as to avoid the dangerous working condition caused because the exhaust operation does not meet the exhaust standard. In addition, if the system includes both the first pressure sensor and the second pressure sensor, the controller may detect the exhaust effect based on a plurality of different manners, thereby effectively improving flexibility and reliability of detecting the exhaust effect.

Optionally, the controller is further configured to: if the brake fluid that is output by the pressurizing assembly to the first transmission subassembly is controlled to reach the second target volume, and a fluctuation amplitude that is of the pressure value collected by the second pressure sensor and that is within second target duration is less than a second amplitude threshold, detect whether the pressure value collected by the second pressure sensor falls within the second pressure range; or if the brake fluid that is output by the pressurizing assembly to the first transmission subassembly is controlled to reach the second target volume, and a fluctuation amplitude that is of the pressure value collected by the second pressure sensor and that is within second target duration is not less than a second amplitude threshold, output a third prompt indicating poor air tightness.

Optionally, the system further includes an infusion pipeline for transmitting the brake fluid. The controller is further configured to: if it is detected that a pressure value of the infusion pipeline is greater than a pressure threshold, control the pressurizing assembly to perform a pressure reduction operation. Therefore, a dangerous working condition of a pressure sudden change caused by factors such as pipeline blockage can be effectively avoided, and safety of the exhaust process can be ensured.

Optionally, the controller is configured to control the pressurizing assembly and the brake fluid transmission assembly to repeatedly perform the exhaust operation for a target quantity of times based on the exhaust instruction, where the target quantity of times is greater than 1, and the exhaust operation includes: the pressurizing assembly outputs the brake fluid to the brake fluid transmission assembly, and the brake fluid transmission assembly connects the pressurizing cylinder to the brake control assembly or the brake assembly.

The controller can effectively ensure the exhaust effect by controlling the pressurizing assembly and the brake fluid transmission assembly to repeatedly perform the exhaust operation for a plurality of times.

Optionally, the controller is configured to: control the pressurizing assembly to output the brake fluid to the brake fluid transmission assembly at a first rate when the exhaust operation is performed for the n^{th} time, and output the brake fluid to the brake fluid transmission assembly at a second rate when the exhaust operation is performed for the (n+1)^{th} time, where n is a positive integer less than the target quantity of times, and the second rate is greater than the first rate.

Since pressure in the infusion pipeline in the hydraulic brake system tends to be stable as the quantity of times the exhaust operation is performed increases, the controller may control the pressurizing assembly to gradually increase a rate at which the brake fluid is output. Thus, exhaust efficiency can be effectively improved on a premise of ensuring safe execution of the exhaust operation.

Optionally, the system further includes a liquid level sensor located in the reservoir and connected to the controller. The controller is further configured to output a fourth prompt if a liquid level of the reservoir that is collected by the liquid level sensor is less than a liquid level threshold. The fourth prompt may be used to prompt the operator to replenish the brake fluid in time, so as to ensure that the exhaust operation can be normally performed.

In another aspect, this invention provides an exhaust control method for a hydraulic brake system, to be applied to a controller in the system. The system further includes a pressurizing assembly, a brake fluid transmission assembly, and a brake control assembly. The pressurizing assembly includes a motor, a piston, and a pressurizing cylinder, the motor is separately connected to a first end of the piston and the controller, a second end of the piston is located in the pressurizing cylinder, and the pressurizing cylinder is separately connected to the brake fluid transmission assembly and a reservoir; and the brake fluid transmission assembly is further separately connected to the brake control assembly, the controller, and a brake assembly. The method includes: obtaining an exhaust instruction; and controlling the pressurizing assembly to output brake fluid to the brake fluid transmission assembly and controlling the brake fluid transmission assembly to connect the pressurizing cylinder to the brake control assembly or the brake assembly based on the exhaust instruction, so as to exhaust gas in the assembly connected to the pressurizing cylinder.

Optionally, before the controlling the pressurizing assembly to output brake fluid to the brake fluid transmission assembly based on the exhaust instruction, the method further includes: controlling the motor to drive the piston to move in a first direction in the pressurizing cylinder based on the exhaust instruction, so as to suck the brake fluid from the reservoir into the pressurizing cylinder. The controlling the pressurizing assembly to output brake fluid to the brake fluid transmission assembly includes: controlling the motor to drive the piston to move in a second direction in the pressurizing cylinder, so as to output the brake fluid in the pressurizing cylinder to the brake fluid transmission assembly. The first direction is opposite to the second direction.

Optionally, the second end of the piston divides the pressurizing cylinder into a first cavity and a second cavity, and both the first cavity and the second cavity are connected to the reservoir. The brake control assembly includes a brake pedal and a master cylinder connected to the brake pedal. The brake fluid transmission assembly includes a first transmission subassembly, a second transmission subassembly, a third transmission subassembly, a fourth transmission subassembly, and a fifth transmission subassembly. The first transmission subassembly is separately connected to the first cavity, the third transmission subassembly, and the fourth transmission subassembly, the second transmission subassembly is separately connected to the second cavity, the third transmission subassembly, and the fourth transmission subassembly, the third transmission subassembly is further separately connected to the fourth transmission subassembly and the master cylinder, the fourth transmission subassembly is further connected to the brake assembly, and the fifth transmission subassembly is connected to the reservoir and the brake assembly.

The controlling the motor to drive the piston to move in a first direction in the pressurizing cylinder, so as to suck the brake fluid from the reservoir into the pressurizing cylinder may include: controlling the motor to drive the piston to move in the first direction in the pressurizing cylinder, controlling the second transmission subassembly, the fourth transmission subassembly, and the fifth transmission subassembly to be connected, and controlling the first transmission subassembly to be disconnected. A process of controlling the brake fluid transmission assembly to connect the pressurizing assembly to the brake control assembly or the brake assembly may include: controlling the motor to drive the piston to move in the second direction in the pressurizing cylinder, controlling the first transmission subassembly to be connected, and controlling the third transmission subassembly or the fourth transmission subassembly to be connected.

Optionally, if the exhaust instruction is an exhaust instruction for the brake control assembly, the controlling the first transmission subassembly to be connected, and controlling the third transmission subassembly or the fourth transmission subassembly to be connected includes: controlling the first transmission subassembly and the third transmission subassembly to be connected, and controlling the fourth transmission subassembly to be disconnected.

Optionally, the brake control assembly further includes a sixth transmission subassembly. The master cylinder includes a front cavity and a rear cavity, where the front cavity is closer to the brake pedal than the rear cavity, the front cavity is connected to the reservoir by using the sixth transmission subassembly, and the rear cavity is connected to the reservoir. The third transmission subassembly includes a first wheel cylinder control valve and a second wheel cylinder control valve, where the first wheel cylinder control valve is separately connected to the front cavity, the first transmission subassembly and the fourth transmission subassembly, and the second wheel cylinder control valve is separately connected to the rear cavity, the first transmission subassembly, and the fourth transmission subassembly. The controlling the first transmission subassembly and the third transmission subassembly to be connected, and controlling the fourth transmission subassembly to be disconnected includes at least one of the following implementations:
controlling the first transmission subassembly, the first wheel cylinder control valve, the second wheel cylinder control valve, and the sixth transmission subassembly to be connected, and controlling the fourth transmission subassembly to be disconnected;
controlling the first transmission subassembly and the second wheel cylinder control valve to be connected, and controlling the first wheel cylinder control valve and the fourth transmission subassembly to be disconnected;
controlling the first transmission subassembly, the first wheel cylinder control valve, and the sixth transmission subassembly to be connected, and controlling the second wheel cylinder control valve and the fourth transmission subassembly to be disconnected; and
controlling the first transmission subassembly and the first wheel cylinder control valve to be connected, and controlling the second wheel cylinder control valve, the fourth transmission subassembly, and the sixth transmission subassembly to be disconnected.

Optionally, if the exhaust instruction is an exhaust instruction for the brake assembly, the controlling the first transmission subassembly to be connected, and controlling the third transmission subassembly or the fourth transmission subassembly to be connected includes: controlling the first transmission subassembly and the fourth transmission subassembly to be connected, and controlling the third transmission subassembly and the fifth transmission subassembly to be disconnected.

Optionally, the brake assembly includes a plurality of brake wheel cylinders, the fourth transmission subassembly includes a plurality of liquid inlet valves connected to the plurality of brake wheel cylinders in a one-to-one correspondence, and the fifth transmission subassembly includes a plurality of liquid outlet valves connected to the plurality of brake wheel cylinders in a one-to-one correspondence. The controlling the first transmission subassembly and the fourth transmission subassembly to be connected, and controlling the third transmission subassembly and the fifth transmission subassembly to be disconnected includes: controlling a liquid inlet valve connected to at least one brake wheel cylinder to be turned on and a liquid outlet valve connected to the brake wheel cylinder to be turned off.

Optionally, the exhaust instruction is an exhaust instruction for at least one target brake wheel cylinder in the brake assembly. The controlling at least one liquid inlet valve in the plurality of liquid inlet valves to be turned on includes: controlling at least one target liquid inlet valve in the plurality of liquid inlet valves to be turned on, where the at least one target liquid inlet valve is a liquid inlet valve connected to the at least one target brake wheel cylinder. The method further includes: controlling a liquid inlet valve other than the at least one target liquid inlet valve to be turned off.

Optionally, the plurality of brake wheel cylinders in the brake assembly include at least one first brake wheel cylinder and at least one second brake wheel cylinder. The first brake wheel cylinder is separately connected to a first liquid inlet valve in the plurality of liquid inlet valves included in the fourth transmission subassembly and a first liquid outlet valve of the plurality of liquid outlet valves included in the fifth transmission subassembly. The second brake wheel cylinder is separately connected to a second liquid inlet valve in the plurality of liquid inlet valves included in the fourth transmission subassembly and a second liquid outlet valve of the plurality of liquid outlet valves included in the fifth transmission subassembly. The second transmission subassembly includes a first liquid suction control valve and a second liquid suction control valve. The first liquid suction control valve is separately connected to the second cavity and the first liquid inlet valve, and the second liquid suction control valve is separately connected to the second cavity and the second liquid inlet valve. The controlling the second transmission subassembly, the fourth transmission subassembly, and the fifth transmission subassembly to be connected includes at least one of the following implementations:
controlling the second liquid suction control valve, the second liquid inlet valve, and the second liquid outlet valve to be turned on, and controlling the first liquid suction control valve, the first liquid inlet valve, and the first liquid outlet valve to be turned off;
controlling the first liquid suction control valve, the first liquid inlet valve, and the first liquid outlet valve to be turned on, and controlling the second liquid suction control valve, the second liquid inlet valve, and the second liquid outlet valve to be turned off; and
controlling the first liquid suction control valve, the first liquid inlet valve, the first liquid outlet valve, the second liquid suction control valve, the second liquid inlet valve, and the second liquid outlet valve to be turned on.

Optionally, the system further includes a pedal feel simulator. The brake fluid transmission assembly further includes a simulator control valve, where the simulator control valve is separately connected to the pedal feel simulator, the front cavity of the master cylinder, and the third transmission subassembly. If the exhaust instruction is an exhaust instruction for the pedal feel simulator, the method further includes: controlling the motor to drive the piston to move in the second direction in the pressurizing cylinder, controlling the first transmission subassembly, the third transmission subassembly, and the simulator control valve to be connected, and controlling the fourth transmission subassembly and the sixth transmission subassembly to be disconnected; and if the motor is controlled to drive the piston to move to an upper limit of a stroke in the second direction, controlling the third transmission subassembly to be disconnected, and controlling the sixth transmission subassembly to be connected.

Optionally, the system further includes a first pressure sensor, where the first pressure sensor is connected to an infusion pipeline between the first transmission subassembly and the fourth transmission subassembly. The method further includes: after controlling the pressurizing assembly to output the brake fluid to the brake fluid transmission assembly and controlling the brake fluid transmission assembly to connect the pressurizing cylinder to the brake control assembly or the brake assembly, controlling the first transmission subassembly and the fourth transmission subassembly to be connected, controlling the third transmission subassembly and the fifth transmission subassembly to be disconnected, and controlling the pressurizing assembly to output brake fluid of a first target volume to the first transmission subassembly; and if it is detected that a pressure value collected by the first pressure sensor does not fall within a first pressure range corresponding to the first target volume, outputting a first prompt indicating that exhausting gas fails; or if it is detected that a pressure value collected by the first pressure sensor falls within a first pressure range corresponding to the first target volume, outputting a second prompt indicating that exhausting gas succeeds.

Optionally, the method may further include: if the brake fluid that is output by the pressurizing assembly to the first transmission subassembly reaches the first target volume, and a fluctuation amplitude that is of the pressure value collected by the first pressure sensor and that is within first target duration is less than a first amplitude threshold, detecting whether the pressure value collected by the first pressure sensor falls within the first pressure range; or if the brake fluid that is output by the pressurizing assembly to the first transmission subassembly reaches the first target volume, and a fluctuation amplitude that is of the pressure value collected by the first pressure sensor and that is within first target duration is not less than a first amplitude threshold, outputting a third prompt indicating poor air tightness.

Optionally, the system further includes a second pressure sensor, where the second pressure sensor is connected to an infusion pipeline between the third transmission subassembly and the front cavity of the master cylinder. The method further includes: after controlling the pressurizing assembly to output the brake fluid to the brake fluid transmission assembly and controlling the brake fluid transmission assembly to connect the pressurizing cylinder to the brake control assembly or the brake assembly, controlling the first transmission subassembly and the first wheel cylinder control valve of the third transmission subassembly to be connected, controlling the fourth transmission subassembly and the sixth transmission subassembly to be disconnected, and controlling the pressurizing assembly to output brake fluid of a second target volume to the first transmission subassembly; and if it is detected that a pressure value collected by the second pressure sensor does not fall within a second pressure range corresponding to the second target volume, outputting a first prompt indicating that exhausting gas fails; or if it is detected that a pressure value collected by the second pressure sensor falls within a second pressure range corresponding to the second target volume, outputting a second prompt indicating that exhausting gas succeeds.

Optionally, the method may further include: if the brake fluid that is output by the pressurizing assembly to the first transmission subassembly reaches the second target volume, and a fluctuation amplitude that is of the pressure value collected by the second pressure sensor and that is within second target duration is less than a second amplitude threshold, detecting whether the pressure value collected by the second pressure sensor falls within the second pressure range; or if the brake fluid that is output by the pressurizing assembly to the first transmission subassembly reaches the second target volume, and a fluctuation amplitude that is of the pressure value collected by the second pressure sensor and that is within second target duration is not less than a second amplitude threshold, outputting a third prompt indicating poor air tightness.

Optionally, the system further includes an infusion pipeline for transmitting the brake fluid. The method further includes: if it is detected that a pressure value of the infusion pipeline is greater than a pressure threshold, controlling the pressurizing assembly to perform a pressure reduction operation.

Optionally, the controlling the pressurizing assembly and the brake fluid transmission assembly to perform an exhaust operation based on the exhaust instruction includes: controlling the pressurizing assembly and the brake fluid transmission assembly to repeatedly perform an exhaust operation for a target quantity of times based on the exhaust instruction, where the target quantity of times is greater than 1, and the exhaust operation includes: the pressurizing assembly outputs the brake fluid to the brake fluid transmission assembly, and the brake fluid transmission assembly connects the pressurizing cylinder to the brake control assembly or the brake assembly.

Optionally, the controlling the pressurizing assembly and the brake fluid transmission assembly to repeatedly perform an exhaust operation for a target quantity of times includes: controlling the pressurizing assembly to output the brake fluid to the brake fluid transmission assembly at a first rate when the exhaust operation is performed for the n^{th} time; and controlling the pressurizing assembly to output the brake fluid to the brake fluid transmission assembly at a second rate when the exhaust operation is performed for the (n+1)^{th} time, where n is a positive integer less than the target quantity of times, and the second rate is greater than the first rate.

Optionally, the system further includes a liquid level sensor located in the reservoir and connected to the controller. The method further includes: outputting a fourth prompt if a liquid level of the reservoir that is collected by the liquid level sensor is less than a liquid level threshold.

It should be understood that for technical effect of the exhaust control method provided in the foregoing aspect, refer to the effect description in the foregoing hydraulic brake system. Details are not described herein again.

According to still another aspect, a computer-readable storage medium is provided. The computer-readable storage medium stores instructions, and when the instructions are run on a controller, the controller is enabled to perform the exhaust control method provided in the foregoing aspect.

According to yet another aspect, a controller is provided, applied to a hydraulic brake system. The hydraulic brake system further includes a pressurizing assembly, a brake fluid transmission assembly, and a brake control assembly. The pressurizing assembly includes a motor, a piston, and a pressurizing cylinder, where the motor is separately connected to a first end of the piston and the controller, a second end of the piston is located in the pressurizing cylinder, the pressurizing cylinder is separately connected to the brake fluid transmission assembly and a reservoir, and the pressurizing cylinder can obtain brake fluid from the reservoir. The brake fluid transmission assembly is further separately connected to the brake control assembly, the controller, and a brake assembly. The controller includes a programmable logic circuit and/or program instructions, and the controller is configured to implement the exhaust control method provided in the foregoing aspect.

In yet another aspect, a vehicle is provided. The vehicle includes a reservoir, a brake assembly, and the hydraulic brake system provided in the above aspect. The reservoir is configured to store brake fluid.

Optionally, the reservoir includes a first liquid storage cavity, a second liquid storage cavity, and a third liquid storage cavity that are spaced. The first liquid storage cavity is separately connected to a pressurizing assembly and a fifth transmission subassembly in the hydraulic brake system, the second liquid storage cavity is connected to a rear cavity of a master cylinder in the hydraulic brake system, and the third liquid storage cavity is connected to a sixth transmission subassembly in the hydraulic brake system.

Optionally, the vehicle may be a self-driving car, a remote-driving car, an airborne vehicle, or the like.

The technical solutions provided in this invention include at least the following beneficial effect.

This invention provides a hydraulic brake system, an exhaust control method thereof, a controller, and a vehicle. Because the controller can control the pressurizing assembly and the brake fluid transmission assembly in the hydraulic brake system to automatically perform the exhaust operation, and the exhaust process does not require manually stepping on the brake pedal, the controller is applicable to the wire-controlled brake system of the future vehicle (for example, the intelligent driving vehicle). Moreover, because the pressurizing assembly is realized by using the motor, the piston and the pressurizing cylinder, fine control of the outlet amount of the brake fluid can be realized to ensure the exhaust effect.

### BRIEF DESCRIPTION OF DRAWINGS

FIG. 1 is a schematic diagram of a structure of a hydraulic brake system according to an embodiment of this invention;
FIG. 2 is another schematic diagram of a structure of a hydraulic brake system according to an embodiment of this invention;
FIG. 3 is a schematic diagram of a path for transmitting brake fluid in a liquid suction process according to an embodiment of this invention;
FIG. 4 is a schematic diagram of a path for transmitting brake fluid when exhaust is performed on a master cylinder according to an embodiment of this invention;
FIG. 5 is a schematic diagram of a path for transmitting brake fluid when exhaust is performed on a rear cavity of a master cylinder according to an embodiment of this invention;
FIG. 6 is a schematic diagram of a path for transmitting brake fluid when exhaust is performed on a front cavity of a master cylinder according to an embodiment of this invention;
FIG. 7 is a schematic diagram of another path for transmitting brake fluid when exhaust is performed on a rear cavity of a master cylinder according to an embodiment of this invention;
FIG. 8 is a schematic diagram of a path for transmitting brake fluid when exhaust is performed on a brake wheel cylinder according to an embodiment of this invention;
FIG. 9 is a schematic diagram of another path for transmitting brake fluid in a liquid suction process according to an embodiment of this invention;
FIG. 10 is a schematic diagram of still another path for transmitting brake fluid in a liquid suction process according to an embodiment of this invention;
FIG. 11 is a schematic diagram of a path for transmitting brake fluid in a liquid inlet process of a pedal feel simulator according to an embodiment of this invention;
FIG. 12 is a schematic diagram of a path for transmitting brake fluid when exhaust is performed on a pedal feel simulator according to an embodiment of this invention;
FIG. 13 is a schematic diagram of a path for transmitting brake fluid when exhaust effect is detected according to an embodiment of this invention;
FIG. 14 is a schematic diagram of another path for transmitting brake fluid when exhaust effect is detected according to an embodiment of this invention;
FIG. 15A and FIG. 15B are a flowchart of an exhaust control method according to an embodiment of this invention;
FIG. 16 is a flowchart of a method for an exhaust operation according to an embodiment of this invention;
FIG. 17 is a flowchart of another exhaust control method according to an embodiment of this invention; and
FIG. 18 is a schematic diagram of a structure of a controller according to an embodiment of this invention.

### DESCRIPTION OF EMBODIMENTS

To make the objectives, technical solutions, and advantages of this invention clearer, the following further describes the implementations of this invention in detail with reference to the accompanying drawings.

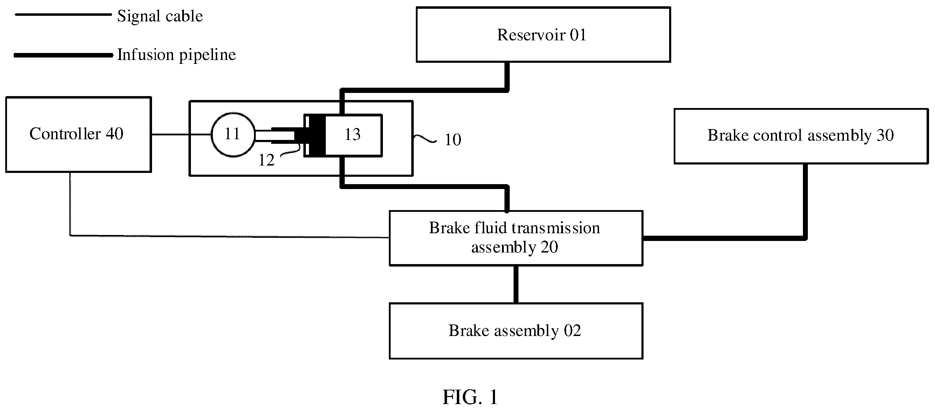

An embodiment of this invention provides a hydraulic brake system. As shown in FIG. 1, the hydraulic brake system includes a pressurizing assembly 10, a brake fluid transmission assembly 20, a brake control assembly 30, and a controller 40.

The pressurizing assembly 10 includes a motor (motor, M) 11, a piston 12, and a pressurizing cylinder 13. The motor 11 is separately connected to a first end of the piston 12 and the controller 40, a second end of the piston 12 is located in the pressurizing cylinder 13, and the pressurizing cylinder 13 is separately connected to the brake fluid transmission assembly 20 and a reservoir 01.

The brake fluid transmission assembly 20 is further separately connected to the brake control assembly 30 and the controller 40, and the brake fluid transmission assembly 20 is further configured to connect the brake assembly 02 and the reservoir 01.

For example, as shown in FIG. 1, the controller 40 is connected to the motor 11 in the pressurizing assembly 10 and the brake fluid transmission assembly 20 by using a signal cable. The brake fluid transmission assembly 20 is connected to the brake control assembly 30, the brake assembly 02, and the reservoir 01 through an infusion pipeline, and the pressurizing cylinder 13 in the pressurizing assembly 10 is also connected to the reservoir 01 through an infusion pipeline.

The controller 40 is configured to control the pressurizing assembly 10 to output brake fluid to the brake fluid transmission assembly 20 and control the brake fluid transmission assembly 20 to connect the pressurizing cylinder 13 to the brake control assembly 30 or the brake assembly 02 based on an exhaust instruction, so as to exhaust gas in the assembly connected to the pressurizing cylinder 13. That is, the controller 40 can control the pressurizing assembly 10 and the brake fluid transmission assembly 20 to perform an exhaust operation.

When the brake fluid transmission assembly 20 connects the pressurizing cylinder 13 to the brake control assembly 30, the pressurizing cylinder 13 can output the brake fluid to the brake control assembly 30, thereby implementing exhaust for the brake control assembly 30. When the brake fluid transmission assembly 20 connects the pressurizing cylinder 13 with the brake assembly 02, the pressurizing cylinder 130 can output the brake fluid to the brake assembly 02, thereby implementing exhaust for the brake assembly 02.

In conclusion, this embodiment of this invention provides a hydraulic brake system. A pressurizing assembly in the system can output brake fluid to a brake fluid transmission assembly under control of a controller. The brake fluid transmission assembly can, under the control of the controller, connect the pressurizing assembly with a brake control assembly or a brake assembly, so as to exhaust gas in the assembly connected to the pressurizing assembly. Because the controller can control the pressurizing assembly and the brake fluid transmission assembly to automatically perform an exhaust operation, and the exhaust process does not require manually stepping on a brake pedal, the controller is applicable to a wire-controlled brake system of a future vehicle (for example, an intelligent driving vehicle). Moreover, because the pressurizing assembly is realized by using a motor, a piston and a pressurizing cylinder, fine control of an outlet amount of the brake fluid can be realized.

Optionally, the controller 40 may be an electronic control unit (electronic control unit, ECU). The exhaust instruction may be triggered to generate based on a variety of different manners. For example, an operator may operate a specific touch button to trigger generation of the exhaust instruction. The specific touch button may be a virtual button on a vehicle-mounted control panel, or may be a physical button on a vehicle. Alternatively, the controller 40 may be further connected to an external vehicle diagnostic instrument, and the vehicle diagnostic instrument may send the exhaust instruction to the controller 40. Alternatively, the operator may perform specific combined operations on the brake control assembly 30 (for example, stepping on the brake pedal at a specific interval for a plurality of times), so as to trigger generation of the exhaust instruction, and this triggering manner may also be referred to as backdoor triggering.

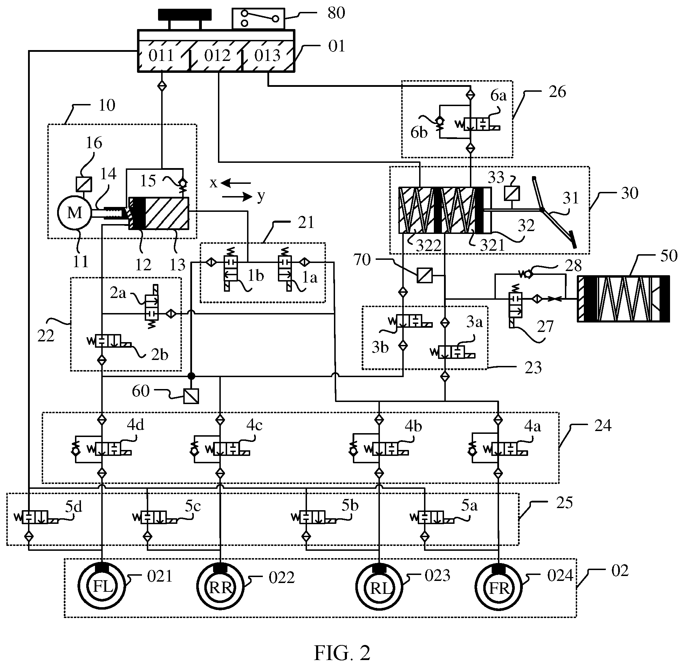

FIG. 2 is a schematic diagram of a structure of another hydraulic brake system according to an embodiment of this invention. Refer to FIG. 2. The controller 40 is configured to: control the motor 11 to drive the piston 12 to move in a first direction x in the pressurizing cylinder 13, so as to suck the brake fluid from the reservoir 01 into the pressurizing cylinder 13, or control the motor 11 to drive the piston 12 to move in a second direction y in the pressurizing cylinder 13 to output the brake fluid in the pressurizing cylinder 13 to the brake fluid transmission assembly 20. That is, the controller 40 can control the motor 11 to drive the piston 12 to move in the pressurizing cylinder 13, thereby implementing automatic suction and discharge of the brake fluid.

The first direction x is opposite to the second direction y. For example, refer to FIG. 2. The first direction x is a direction closer to the motor 11, and the second direction y is a direction far away from the motor 11.

The controller 40 may control a movement direction of the piston 12 by controlling a rotation direction of the motor 11. For example, when the controller 40 controls the motor 11 to rotate in a reverse direction, the motor 11 may drive the piston 12 to move in the first direction x in the pressurizing cylinder 13. When the controller 40 controls the motor 11 to rotate in a forward direction, the motor 11 may drive the piston 12 to move in the second direction y in the pressurizing cylinder 13. In addition, refer to FIG. 2. The pressurizing assembly 10 may further include a deceleration mechanism 14, and the motor 11 may be connected to the first end of the piston 12 by using the deceleration mechanism 14.

Optionally, the motor 11 may be a three-phase brushless motor, and the three-phase brushless motor can precisely control movement of the piston 12, so as to precisely control an inlet amount and an outlet amount of the pressurizing cylinder 13, to ensure exhaust effect.

In the system provided in this embodiment of this invention, because the motor 11 may drive the piston 12 to move in two different directions under control of the controller 40, the pressurizing assembly 10 may also be referred to as a bidirectional plunger pump (dual apply plunger, DAP).

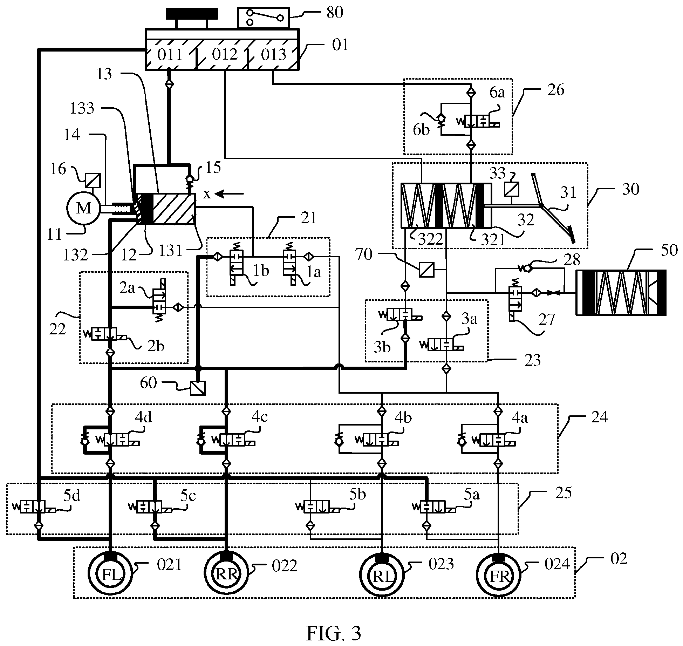

FIG. 3 is a schematic diagram of a structure of still another hydraulic brake system according to an embodiment of this invention. As shown in FIG. 3, the second end of the piston 12 may divide the pressurizing cylinder 13 into a first cavity 131 and a second cavity 132. Both the first cavity 131 and the second cavity 132 are connected to the reservoir 01, and the second cavity 132 is closer to the motor 11 relative to the first cavity 131.

For example, refer to FIG. 3. The pressurizing assembly 10 may further include a one-way valve 15, and the first cavity 131 may be connected to the reservoir 01 through the one-way valve 15. The one-way valve 15 is configured to prevent brake fluid in the first cavity 131 from flowing into the reservoir 01. In addition, an adjustment hole 133 is further disposed on a side of the pressurizing cylinder 13 that is closer to the motor 11, and the reservoir 01 is further connected to the adjustment hole 133 through an infusion pipeline. A guide groove is further disposed on the piston 12. After the piston 12 moves to an upper limit of a stroke in the first direction x, the guide groove can be aligned with the adjustment hole 133, and the brake fluid in the reservoir 01 can flow into the second cavity 132 through the adjustment hole 133 and the guide groove. After the piston 12 moves in the second direction y, the guide groove is no longer aligned with the adjustment hole 133, that is, the piston 12 can block the adjustment hole 133, and the brake fluid in the reservoir 01 cannot flow into the second cavity 132.

It should be understood that since the piston 12 can move in the pressurizing cylinder 13, the first cavity 131 and the second cavity 132 are not two cavities with fixed volumes. That is, the volumes of the first cavity 131 and the second cavity 132 may change with the movement of the piston 12.

With continued reference to FIG. 3, the brake control assembly 30 may include a brake pedal (brake pedal) 31, and a master cylinder (master cylinder) 32 connected to the brake pedal 31. The brake fluid transmission assembly 20 may include: a first transmission subassembly 21, a second transmission subassembly 22, a third transmission subassembly 23, a fourth transmission subassembly 24, and a fifth transmission subassembly 25. The first transmission subassembly 21 is separately connected to the first cavity 131, the third transmission subassembly 23, and the fourth transmission subassembly 24. The second transmission subassembly 22 is separately connected to the second cavity 132, the third transmission subassembly 23, and the fourth transmission subassembly 24. The third transmission subassembly 23 is further separately connected to the fourth transmission subassembly 24 and the master cylinder 32. The fourth transmission subassembly 24 is further connected to the brake assembly 02. The fifth transmission subassembly 25 is further connected to the reservoir 01 and the brake assembly 02.

Correspondingly, the controller 40 may be configured to:
control the motor 11 to drive the piston 12 to move in the first direction x in the pressurizing cylinder 13, control the second transmission subassembly 22, the fourth transmission subassembly 24, and the fifth transmission subassembly 25 to be connected, and control the first transmission subassembly 21 to be disconnected. In this case, the brake fluid can flow into the first cavity 131 from the reservoir 01, and this process may also be referred to as a liquid suction process or a liquid replenishment process.

In the foregoing liquid suction process, the first transmission subassembly 21 is controlled to be disconnected, so that vacuum negative pressure may be formed in the first cavity 131 (which is also referred to as a pressurization cavity) of the pressurizing cylinder 13. In this way, the brake fluid in the reservoir 01 can flow to the first cavity 131 through the one-way valve 15. In addition, because the first transmission subassembly 21 is disconnected, air can be prevented from entering the first cavity 131 through the first transmission subassembly 21.

In addition, in the liquid suction process, the second transmission subassembly 22, the fourth transmission subassembly 24, and the fifth transmission subassembly 25 are connected. Therefore, as shown by a bold black line in FIG. 3, the reservoir 01, the second cavity 132, and the foregoing transmission subassemblies in a connected state may form a transmission circuit of the brake fluid. Further, it can be ensured that the motor 11 can drive the piston 12 to move in the first direction x to the upper limit of the stroke (that is, the piston 12 can be fully retracted), so that a volume of the first cavity 131 is large enough to suck more brake fluid.

In addition, the controller 40 may be further configured to: control the motor 11 to drive the piston 12 to move in the second direction y in the pressurizing cylinder 13, control the first transmission subassembly 21 to be connected, and control the third transmission subassembly 23 or the fourth transmission subassembly 24 to be connected.

In this case, the brake fluid can be transmitted to the brake control assembly 30 or the brake assembly 02 through the transmission subassemblies in the connected state, thereby implementing exhaust for the brake control assembly 30 or the brake assembly 02. This process may also be referred to as an exhaust process. In addition, in the exhaust process, the second transmission subassembly 22 may be disconnected or connected. This is not limited in this embodiment of this invention.

Optionally, in this embodiment of this invention, the exhaust instruction may be an exhaust instruction for the brake control assembly 30, or may be an exhaust instruction for the brake assembly 02. Correspondingly, the controller 40 may perform exhaust on different components in the hydraulic brake system based on a type of the exhaust instruction, thereby effectively improving exhaust flexibility.

In an optional implementation of this embodiment of this invention, if the exhaust instruction is an exhaust instruction for the brake control assembly 30, the controller 40 may be configured to:
control the motor 11 to drive the piston 12 to move in the second direction y in the pressurizing cylinder 13, control the first transmission subassembly 21 and the third transmission subassembly 23 to be connected, and control the fourth transmission subassembly 24 to be disconnected. In this case, the brake fluid in the first cavity 131 can flow into the brake control assembly 30 through the first transmission subassembly 21 and the third transmission subassembly 23. In addition, because the brake control assembly 30 is further connected to the reservoir 01, the brake fluid in the brake control assembly 30 may also flow into the reservoir 01. Thus, exhaust for the brake control assembly 30 can be implemented.

Disconnecting the fourth transmission subassembly 24 when performing exhaust on the brake control assembly 30 can prevent the brake fluid from being diverted by the fourth transmission subassembly 24 to ensure that sufficient brake fluid is pressed into the brake control assembly 30.

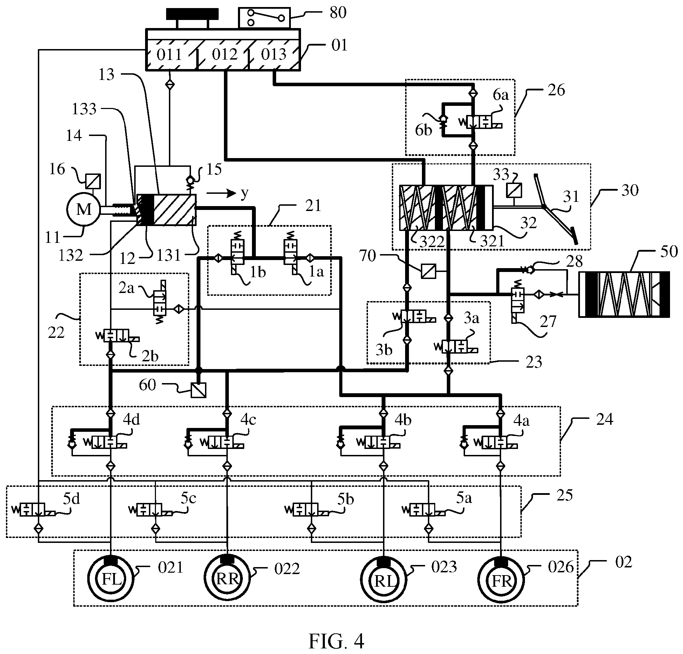

Optionally, as shown in FIG. 4, the brake fluid transmission assembly 20 may further include a sixth transmission subassembly 26. The master cylinder 32 includes a front cavity 321 and a rear cavity 322. The front cavity 321 is closer to the brake pedal 31 than the rear cavity 322, and the front cavity 322 is connected to the reservoir 01 by using the sixth transmission subassembly 26. The rear cavity 322 is configured to be directly connected to the reservoir 01 through the infusion pipeline.

The third transmission subassembly 23 includes a first wheel cylinder control valve 3a and a second wheel cylinder control valve 3b. The first wheel cylinder control valve 3a is separately connected to the front cavity 321, the first transmission subassembly 21, and the fourth transmission subassembly 24. The second wheel cylinder control valve 3b is separately connected to the rear cavity 322, the first transmission subassembly 21, and the fourth transmission subassembly 24.

The controller 40 is configured to: control the motor 11 to drive the piston 12 to move in the second direction y in the pressurizing cylinder 13, and perform at least one of the following operations.

Operation 1.1: Control the first transmission subassembly 21, the first wheel cylinder control valve 3a, the second wheel cylinder control valve 3b, and the sixth transmission subassembly 26 to be connected, and control the fourth transmission subassembly 24 to be disconnected.

Refer to the bold black line in FIG. 4. In this case, the brake fluid in the first cavity 131 may flow into the reservoir 01 through the first transmission subassembly 21, the first wheel cylinder control valve 3a, the front cavity 321, and the sixth transmission subassembly 26, and flow into the reservoir 01 through the first transmission subassembly 21, the second wheel cylinder control valve 3b, and the rear cavity 322. Thus, simultaneous exhaust for the front cavity 321 and the rear cavity 322 can be implemented.

Operation 1.2: Control the first transmission subassembly 21 and the second wheel cylinder control valve 3b to be connected, and control the first wheel cylinder control valve 3a and the fourth transmission subassembly 24 to be disconnected.

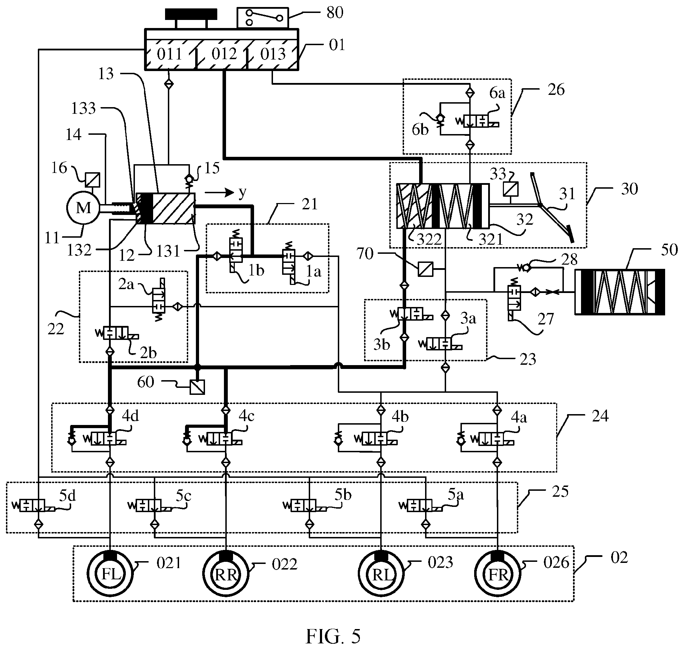

Refer to a bold black line in FIG. 5. In this case, the brake fluid in the first cavity 131 can flow into the reservoir 01 through the first transmission subassembly 21, the second wheel cylinder control valve 3b, and the rear cavity 322. Since the first wheel cylinder control valve 3a is turned off, the brake fluid in the first cavity 131 cannot be transmitted to the front cavity 321. Thus, separate exhaust for the rear cavity 322 can be implemented.

Operation 1.3: Control the first transmission subassembly 21, the first wheel cylinder control valve 3a, and the sixth transmission subassembly 26 to be connected, and control the second wheel cylinder control valve 3b and the fourth transmission subassembly 24 to be disconnected.

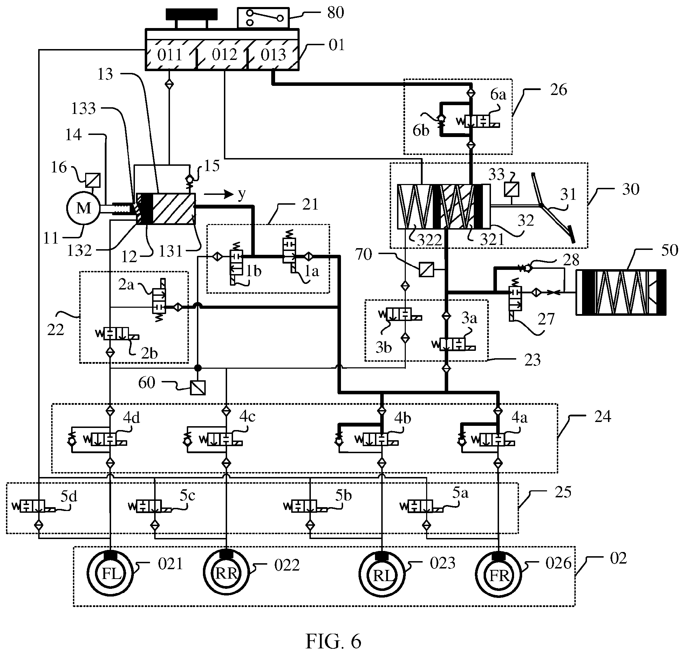

Refer to a bold black line in FIG. 6. In this case, the brake fluid in the first cavity 131 may flow into the reservoir 01 through the first transmission subassembly 21, the first wheel cylinder control valve 3a, the front cavity 321, and the sixth transmission subassembly 26. Since the second wheel cylinder control valve 3b is turned off, the brake fluid in the first cavity 131 cannot be transmitted to the rear cavity 322. Thus, separate exhaust for the front cavity 321 can be implemented.

Operation 1.4: Control the first transmission subassembly 21 and the first wheel cylinder control valve 3a to be connected, and control the second wheel cylinder control valve 3b, the fourth transmission subassembly 24, and the sixth transmission subassembly 26 to be disconnected.

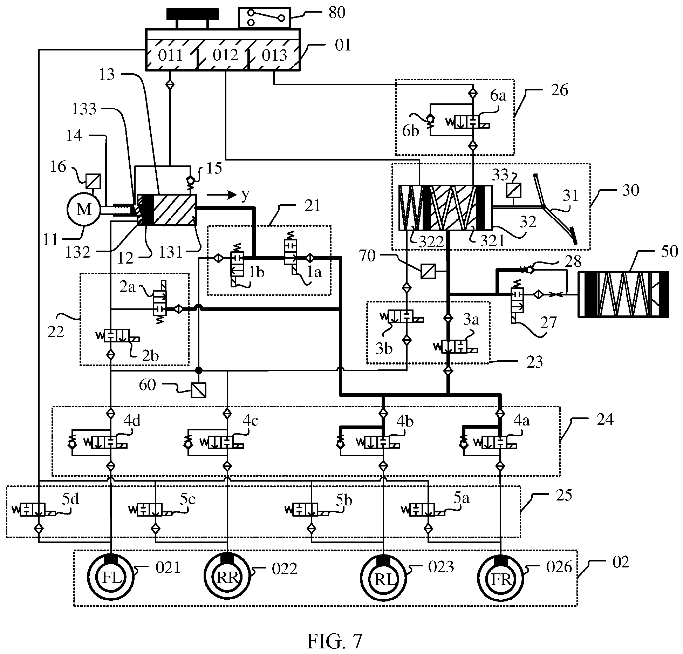

Refer to a bold black line in FIG. 7. In this case, the brake fluid in the first cavity 131 may flow into the front cavity 321 through the first transmission subassembly 21 and the first wheel cylinder control valve 3a. Since both the second wheel cylinder control valve 3b and the sixth transmission subassembly 26 are disconnected, pressure in the front cavity 321 may be transferred to the rear cavity 322 through the piston in the front cavity 321, thereby achieving the purpose of emptying air in the rear cavity 322. That is, separate exhaust for the rear cavity 322 can be implemented based on this operation 1.4.

In this embodiment of this invention, exhaust for different cavities of the master cylinder 32 may be implemented by using the operation 1.1 to the operation 1.4, thereby effectively improving exhaust flexibility. In addition, in some scenarios, gas may enter only the front cavity 321 or the rear cavity 322 in the master cylinder 32. In this case, the solution provided in this embodiment of this invention may be used, and only one cavity into which gas enters in the master cylinder 32 is separately exhausted. This enables precise and efficient exhaust.

Optionally, in the operation 1.1 to the operation 1.4, the controller 40 may control the second transmission subassembly 22 to be connected, or may control the second transmission subassembly 22 to be disconnected. For example, refer to FIG. 4 to FIG. 7. The controller 40 may control the second transmission subassembly 22 to remain in a disconnected state.

Optionally, refer to FIG. 2 to FIG. 7. It can be learned that the first transmission subassembly 21 may include a first pressurizing control valve 1a and a second pressurizing control valve 1b. The first pressurizing control valve 1a is separately connected to the first cavity 131 and the first wheel cylinder control valve 3a, and the second pressurizing control valve 1b is separately connected to the first cavity 131 and the second wheel cylinder control valve 3b.

Correspondingly, in the operation 1.1 to the operation 1.4, the controller 40 may control both the first pressurizing control valve 1a and the second pressurizing control valve 1b to be turned on. Alternatively, to reduce a quantity of control valves that need to be switched between an on state and an off state, thereby reducing power consumption of the controller 40, in the operation 1.2, as shown in FIG. 5, the controller 40 may control only the first pressurizing control valve 1a to be turned on, and the second pressurizing control valve 1b may remain in the off state. Refer to FIG. 6 and FIG. 7. In the operation 1.3 and the operation 1.4, the controller 40 may control only the second pressurizing control valve 1b to be turned on, and the first pressurizing control valve 1a may remain in the off state.

It may be understood that, in a process of performing exhaust on the brake control assembly 30, because the fourth transmission subassembly 24 is disconnected, the brake fluid cannot flow into the brake assembly 02. Therefore, the fifth transmission subassembly 25 may be connected or disconnected. This is not limited in this embodiment of this invention. For example, the fifth transmission subassembly 25 may remain in the connected state.

It may be further understood that the exhaust instruction obtained by the controller 40 for the brake control assembly 30 may further indicate a specific exhaust manner for the two cavities of the master cylinder 32. That is, the controller 40 may perform one of the operation 1.1 to the operation 1.4 based on the exhaust instruction. For example, if the exhaust instruction instructs to perform exhaust on the two cavities of the master cylinder 32 at the same time, the controller 40 may perform the operation 1.1. If the exhaust instruction instructs to perform separate exhaust on the front cavity 321 of the master cylinder 32, the controller 40 may perform the operation 1.3. If the exhaust instruction instructs to perform separate exhaust on the front cavity 321 and the rear cavity 322 of the master cylinder 32 in order, the controller 40 may perform the operation 1.3 and the operation 1.4 in order, or the operation 1.3 and the operation 1.2 in order.

In another optional implementation of this embodiment of this invention, if the exhaust instruction is an exhaust instruction for the brake assembly 02, the controller 40 may be configured to:
control the motor 11 to drive the piston 12 to move in the second direction y in the pressurizing cylinder 13, control the first transmission subassembly 21 and the fourth transmission subassembly 24 to be connected, and control the third transmission subassembly 23 and the fifth transmission subassembly 25 to be disconnected.

In this case, the brake fluid in the first cavity 131 can flow into the brake assembly 02 through the first transmission subassembly 21 and the fourth transmission subassembly 24. In addition, because the fifth transmission subassembly 25 is disconnected, the brake fluid flowing into the brake assembly 02 cannot flow back to the reservoir 01, but can be discharged only through an exhaust port on the brake assembly 02, thereby implementing exhaust for the brake assembly 02. In addition, because the third transmission subassembly 23 is disconnected in a process of performing exhaust on the brake assembly 02, the brake fluid can be prevented from being diverted by the third transmission subassembly 23. This ensures that the brake fluid flowing into the brake assembly 02 through the fourth transmission subassembly 24 can effectively exhaust gas in the brake assembly 02.

It should be understood that, before exhaust is performed on the brake assembly 02, the exhaust port on the brake assembly 02 further needs to be opened. For example, an exhaust bolt is disposed in the exhaust port, and an operator may unscrew the exhaust bolt to open the exhaust port.

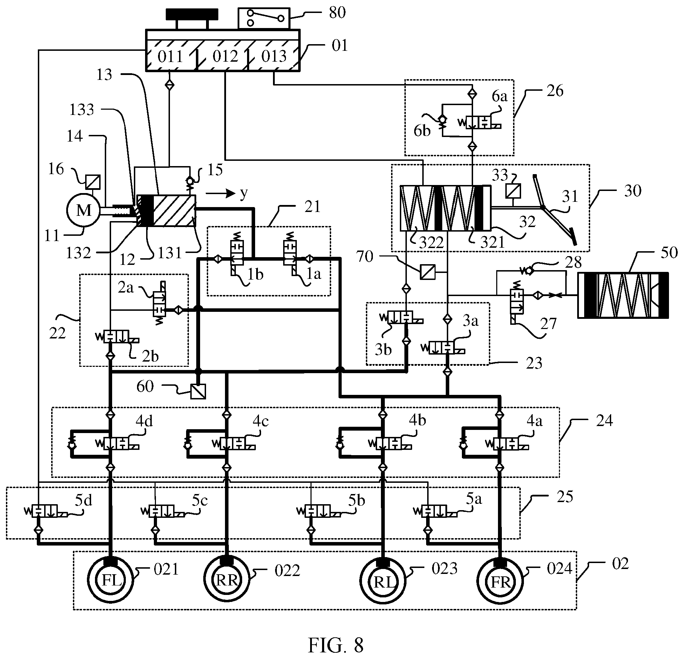

It should also be understood that, in the process of performing exhaust on the brake assembly 02, the brake fluid cannot flow into the master cylinder 32 because the third transmission subassembly 23 is disconnected. Therefore, the sixth transmission subassembly 26 may be connected or disconnected. This is not limited in this embodiment of this invention. For example, refer to FIG. 8. The sixth transmission subassembly 26 may remain in the connected state.

Optionally, refer to FIG. 2 to FIG. 8. The brake assembly 02 may include a plurality of brake wheel cylinders, the fourth transmission subassembly 24 may include a plurality of liquid inlet valves connected to the plurality of brake wheel cylinders in a one-to-one correspondence, and the fifth transmission subassembly 25 may include a plurality of liquid outlet valves connected to the plurality of brake wheel cylinders in a one-to-one correspondence. For example, FIG. 2 to FIG. 8 show four brake wheel cylinders, namely, a brake wheel cylinder 021 to a brake wheel cylinder 024, a liquid inlet valve 4a to a liquid inlet valve 4d connected to the four brake wheel cylinders in a one-to-one correspondence, and a liquid outlet valve 5a to a liquid outlet valve 5d connected to the four brake wheel cylinders in a one-to-one correspondence.

The controller 40 may be configured to: control the motor 11 to drive the piston 12 to move in the second direction y in the pressurizing cylinder 13, and control a liquid inlet valve connected to at least one brake wheel cylinder to be turned on and a liquid outlet valve connected to the brake wheel cylinder to be turned off. That is, if the controller 40 controls a liquid inlet valve connected to a brake wheel cylinder to be turned on, the controller 40 may synchronously control a liquid outlet valve connected to the brake wheel cylinder to be turned off. It can be learned that, in the hydraulic control system provided in this embodiment of this invention, the controller 40 may implement exhaust for some or all of the brake wheel cylinders by controlling some or all of the liquid inlet valves to be turned on.

For example, refer to FIG. 8. The controller 40 may control all four liquid inlet valves included in the fourth transmission subassembly 24 to be turned on, and control all four liquid outlet valves included in the fifth transmission subassembly 25 to be turned off. Thus, exhaust can be performed simultaneously on the four brake wheel cylinders included in the brake assembly 02.

It should be understood that, for another liquid outlet valve other than the liquid outlet valve connected to the at least one brake wheel cylinder, the controller 40 may control the another liquid outlet valve to be turned on, or may control the another liquid outlet valve to be turned off. This is not limited in this embodiment of this invention. In addition, in a process of performing exhaust on the brake assembly 02, the controller 40 may control the second transmission subassembly 22 to be connected, or may control the second transmission subassembly 22 to be disconnected. For example, refer to FIG. 8. The second transmission subassembly 22 may remain in the disconnected state.

Optionally, the exhaust instruction obtained by the controller 40 may be an exhaust instruction for at least one target brake wheel cylinder in the brake assembly 02. Correspondingly, the controller 40 may be configured to:
control the motor 11 to drive the piston 12 to move in the second direction y in the pressurizing cylinder 13, control at least one target liquid inlet valve in the plurality of liquid inlet valves to be turned on, and control another liquid inlet valve in the plurality of liquid inlet valves other than the at least one target liquid inlet valve to be turned off. The at least one target liquid inlet valve is a liquid inlet valve connected to the at least one target brake wheel cylinder.

That is, the controller 40 may perform exhaust only on a target brake wheel cylinder that has an exhaust requirement in the brake assembly based on an indication of the exhaust instruction, without performing exhaust on another brake wheel cylinder that has no exhaust requirement. For example, if a brake wheel cylinder of only one wheel is maintained during vehicle maintenance, exhaust may be performed on only the brake wheel cylinder by using the solution provided in this embodiment of this invention. Thus, not only precise and efficient exhaust is achieved, but also waste of brake fluid can be avoided.

Refer to FIG. 8, it is assumed that the four brake wheel cylinders included in the brake assembly 02 are: a front left (front left, FL) brake wheel cylinder 021, a rear right (rear right, RR) brake wheel cylinder 022, and a rear left (rear left, RL) brake wheel cylinder 023 and a front right (front right, FR) brake wheel cylinder 024. By controlling different liquid inlet valves to be turned on, the controller 40 may implement 15 exhaust modes in a mode 2.1 to a mode 2.15 shown in Table 1. That is, the controller 40 may, under the indication of the exhaust instruction, perform exhaust on the brake assembly 02 by using one of the mode 2.1 to the mode 2.15.

**Table 1**

| Mode | Exhausted brake wheel cylinder | Turned-on inlet valve | Mode | Exhausted brake wheel cylinder | Turned-on inlet valve |
|---|---|---|---|---|---|
| 2.1 | FL | 4d | 2.9 | RR+FR | 4c+4a |
| 2.2 | RR | 4c | 2.10 | RL+FR | 4b+4a |
| 2.3 | RL | 4b | 2.11 | FL+RR+RL | 4d+4c+4b |
| 2.4 | FR | 4a | 2.12 | FL+RR+FR | 4d+4c+4a |
| 2.5 | FL+RR | 4d+4c | 2.13 | RR+RL+FR | 4c+4b+4a |
| 2.6 | FL+RL | 4d+4b | 2.14 | FL+RL+FR | 4d+4b+4a |
| 2.7 | FL+FR | 4d+4a | 2.15 | FL+RR+RL+FR | 4d+4c+4b+4a |
| 2.8 | RR+RL | 4c+4b | | | |

For example, refer to Table 1. In the mode 2.1, the controller 40 controls the liquid inlet valve 4d in the fourth transmission subassembly 24 to be turned on, and controls other liquid inlet valves to be turned off, so that separate exhaust for the FL brake wheel cylinder 021 can be implemented. It should be understood that in this mode 2.1, the controller 40 needs to control the liquid outlet valve 5d to be turned off, and other liquid outlet valves may remain in an on state.

In the mode 2.5, the controller 40 controls the liquid inlet valves 4d and 4c in the fourth transmission subassembly 24 to be turned on and controls the liquid inlet valves 4b and 4a to be turned off, so that exhaust for the FL brake wheel cylinder 021 and the RR brake wheel cylinder 022 can be implemented. It should be understood that in this mode 2.5, the controller 40 needs to control the liquid outlet valve 5d and 5c to be turned off, and other liquid outlet valves may remain in the on state.

In the mode 2.11, the controller 40 controls the liquid inlet valves 4d, 4c, and 4b in the fourth transmission subassembly 24 to be turned on and controls the liquid inlet valve 4a to be turned off, so that exhaust for the FL brake wheel cylinder 021, the RR brake wheel cylinder 022, and the RL brake wheel cylinder 023 can be implemented. It should be understood that in this mode 2.11, the controller 40 needs to control the liquid outlet valves 5d, 5c, and 5d to be turned off, and the liquid outlet valve 5a may remain in the on state.

Optionally, the plurality of brake wheel cylinders in the brake assembly 02 may include at least one first brake wheel cylinder and at least one second brake wheel cylinder. The first brake wheel cylinder is separately connected to a first liquid inlet valve in the plurality of liquid inlet valves included in the fourth transmission subassembly 24 and a first liquid outlet valve of the plurality of liquid outlet valves included in the fifth transmission subassembly 25. The second brake wheel cylinder is separately connected to a second liquid inlet valve in the plurality of liquid inlet valves included in the fourth transmission subassembly 24 and a second liquid outlet valve of the plurality of liquid outlet valves included in the fifth transmission subassembly 25.

Correspondingly, as shown in FIG. 2 to FIG. 8, the second transmission subassembly 22 may include a first liquid suction control valve 2a and a second liquid suction control valve 2b. The first liquid suction control valve 2a, the first pressurizing control valve 1a in the first transmission subassembly 21, and the first wheel cylinder control valve 3a in the third transmission subassembly 23 may all be connected to the first liquid inlet valve. The second liquid suction control valve 2b, the second pressurizing control valve 1b in the first transmission subassembly 21, and the second wheel cylinder control valve 3b in the third transmission subassembly 23 may all be connected to the second liquid inlet valve.

For example, refer to FIG. 2 to FIG. 8. The brake assembly 02 may include two first brake wheel cylinders in total, namely, the first brake wheel cylinder 023 and the first brake wheel cylinder 024, and two second brake wheel cylinders in total, namely, the second brake wheel cylinder 021 and the second brake wheel cylinder 022. The first brake wheel cylinder 024 is separately connected to the first liquid inlet valve 4a and the first liquid outlet valve 5a. The first brake wheel cylinder 023 is separately connected to the first liquid inlet valve 4b and the first liquid outlet valve 5b. The second brake wheel cylinder 022 is separately connected to the second liquid inlet valve 4c and the first liquid outlet valve 5c. The second brake wheel cylinder 021 is separately connected to the second liquid inlet valve 4d and the second liquid outlet valve 5d.

In addition, the first pressurizing control valve 1a, the first liquid suction control valve 2a, and the first wheel cylinder control valve 3a are respectively connected to the first liquid inlet valve 4a and the first liquid inlet valve 4b. The second pressurizing control valve 1b, the second liquid suction control valve 2b, and the second wheel cylinder control valve 3b are respectively connected to the second liquid inlet valve 4c and the second liquid inlet valve 4d.

Refer to FIG. 8. It can be seen that the first wheel cylinder control valve 3a may establish a hydraulic circuit between the master cylinder 32 and the first brake wheel cylinders, and that the second wheel cylinder control valve 3b may establish another hydraulic circuit between the master cylinder 32 and a second brake wheel cylinder. Safety and reliability of controlling the brake assembly 02 can be ensured by using the two independent hydraulic circuits. Correspondingly, two pressurizing control valves may be disposed in the system provided in this embodiment of this invention. The two pressurizing control valves are respectively connected to the first liquid inlet valve and the second liquid inlet valve, so that independent control of different hydraulic circuits can be implemented.

Based on the foregoing system architecture, in a process (namely, a liquid suction process) of controlling the motor 11 to drive the piston 12 to move in the first direction x in the pressurizing cylinder 13, the controller 40 may perform one of the following operations.

Operation 3.1: Control the second liquid suction control valve 2b, the second liquid inlet valve, and the second liquid outlet valve to be turned on, and control the first liquid suction control valve 2a, the first liquid inlet valve, and the first liquid outlet valve to be turned off.

Using FIG. 3 as an example, the controller 40 may control second liquid inlet valves 4c and 4d and second liquid outlet valves 5c and 5d to be turned on, and control first liquid inlet valves 4a and 4b and first liquid outlet valves 5a and 5d to be turned off. At this time, refer to the bold black line in FIG. 3, a hydraulic circuit is formed among the reservoir 01, the second cavity 132 of the pressurizing cylinder 13, and the second brake wheel cylinders 021 and 022, and the brake fluid can be sucked into the first cavity 131.

Operation 3.2: Control the first liquid suction control valve 2a, the first liquid inlet valve, and the first liquid outlet valve to be turned on, and control the second liquid suction control valve 2b, the second liquid inlet valve, and the second liquid outlet valve to be turned off.

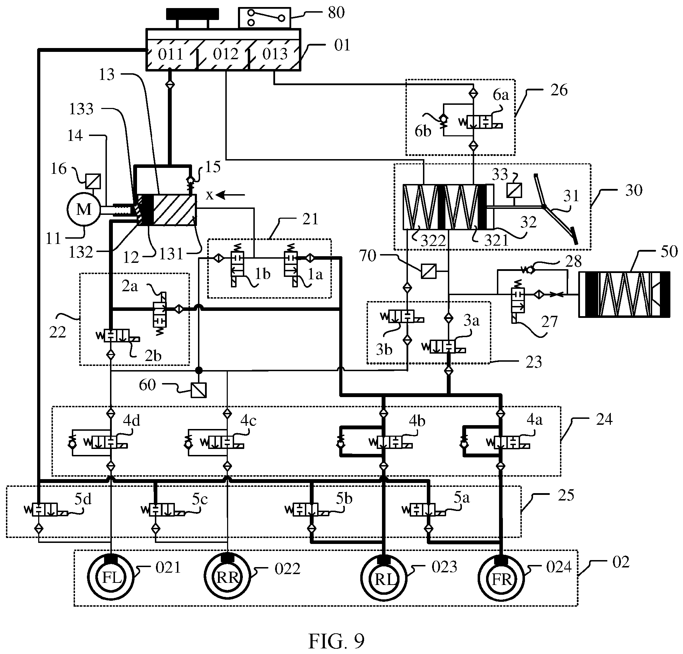

Refer to FIG. 9. The controller 40 may control the first liquid inlet valves 4a and 4b and the first liquid outlet valves 5a and 5d to be turned on, and control the second liquid inlet valves 4c and 4d and the second liquid outlet valves 5c and 5d to be turned off. At this time, refer to the bold black line in FIG. 9, a hydraulic circuit is formed among the reservoir 01, the second cavity 132 of the pressurizing cylinder 13, and the first brake wheel cylinders 023 and 024, and the brake fluid can be sucked into the first cavity 131.

Operation 3.3: Control the first liquid suction control valve 2a, the first liquid inlet valve, the first liquid outlet valve, the second liquid suction control valve 2b, the second liquid inlet valve, and the second liquid outlet valve to be turned on.

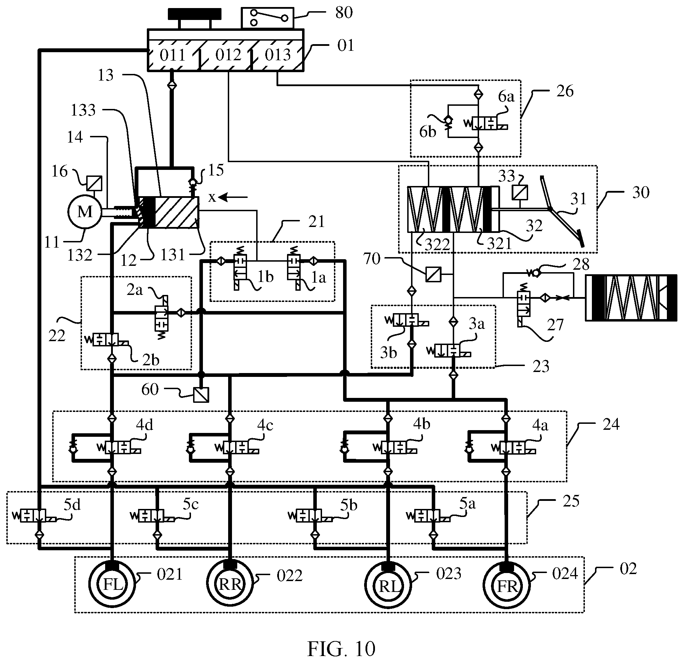

Refer to FIG. 10. The controller 40 may control the first liquid inlet valves 4a and 4b, the second liquid inlet valves 4c and 4d, the first liquid outlet valves 5a and 5d, and the second liquid outlet valves 5c and 5d to be turned on. At this time, refer to a bold black line in FIG. 10, a hydraulic circuit is formed among the reservoir 01, the second cavity 132 of the pressurizing cylinder 13, and the four brake wheel cylinders 021 to 024, and the brake fluid can be sucked into the first cavity 131.

It may be understood that the controller 40 may perform any one of the foregoing operations in the liquid suction process, or may sequentially perform the plurality of operations, for example, may sequentially perform the operation 3.1 and the operation 3.2. The controller 40 may control liquid suction of the pressurizing assembly 10 by using at least one of the operation 3.1 to the operation 3.3, thereby effectively improving flexibility of controlling liquid suction of the pressurizing assembly.

As described above, in the liquid suction process, the controller 40 controls the third transmission subassembly 23 to be disconnected, and brake fluid that is output by the second transmission subassembly 22 cannot flow into the brake control assembly 30. Therefore, in the liquid suction process, the sixth transmission subassembly 26 may be connected or disconnected. For example, refer to FIG. 3, FIG. 9, and FIG. 10. The sixth transmission subassembly 26 may remain in the connected state.

Optionally, refer to FIG. 2 to FIG. 10. The system may further include a pedal feel simulator 50. The brake fluid transmission assembly 20 may further include a simulator control valve 27. The simulator control valve 27 is separately connected to the pedal feel simulator 50, the front cavity 321 of the master cylinder, and the third transmission subassembly 23. The simulator control valve 27 may also be referred to as a pedal simulator valve (pedal simulator valve, PSV).

Correspondingly, in this embodiment of this invention, the exhaust instruction may alternatively be an exhaust instruction for the pedal feel simulator 50. The controller 40 may be further configured to control the pressurizing assembly 10 and the brake fluid transmission assembly 20 to perform exhaust on the pedal feel simulator 50. The exhaust process may include a simulator liquid adding sub-process and a simulator exhaust sub-process.

The simulator liquid adding sub-process is as follows: controlling the motor 11 to drive the piston 12 to move in the second direction y in the pressurizing cylinder 13, controlling the first transmission subassembly 21, the third transmission subassembly 23, and the simulator control valve 27 to be connected, and controlling the fourth transmission subassembly 24 and the sixth transmission subassembly 26 to be disconnected.

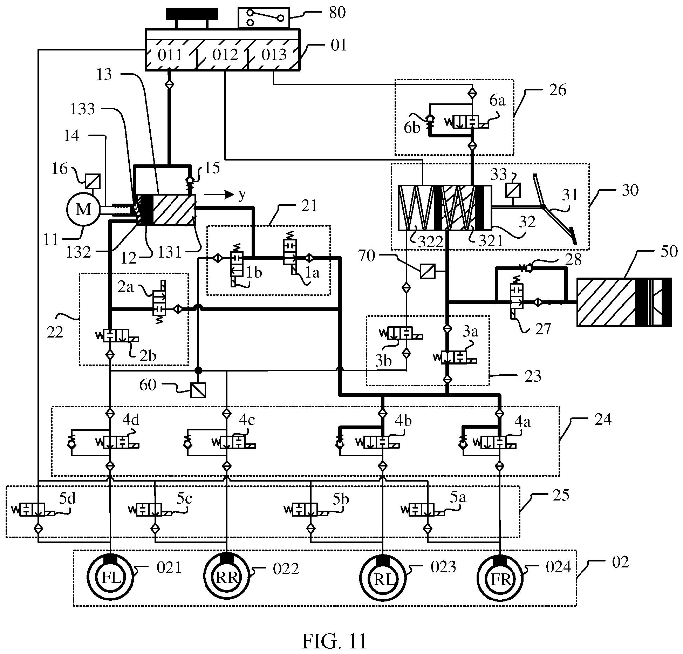

In this case, refer to a bold black line in FIG. 11. An infusion pipeline between the first cavity 131 of the pressurizing cylinder 13 and the pedal feel simulator 50 is conducted, and the brake fluid in the first cavity 131 may flow into the pedal feel simulator 50.

The simulator exhaust sub-process is as follows: if the piston 12 moves to an upper limit of a stroke in the second direction y, controlling the third transmission subassembly 23 to be disconnected, and controlling the sixth transmission subassembly 26 to be connected.

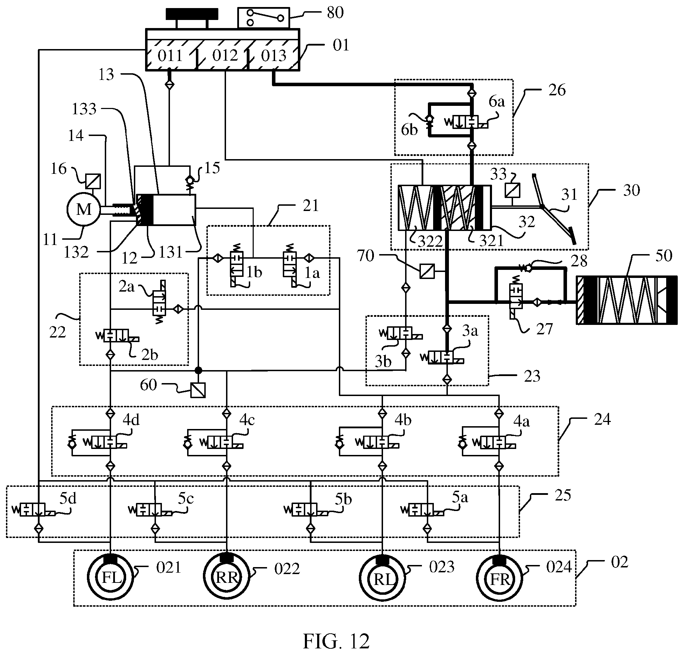

The controller 40 controls the motor 11 to drive the piston 12 to move to the upper limit of the stroke in the second direction y to ensure that the brake fluid can fill the pedal feel simulator 50. Then, after the controller 40 controls the third transmission subassembly 23 to be disconnected, and controls the sixth transmission subassembly 26 to be connected, as shown by using a bold black line in FIG. 12, a spring in the pedal feel simulator 50 can be retracted under an elastic force of the spring. Because the third transmission subassembly 23 is disconnected, the brake fluid flows into the front cavity 321 of the master cylinder 32 through the simulator control valve 27, and then flows into the reservoir 01 through the sixth transmission subassembly 26. Thus, exhaust for the pedal feel simulator 50 can be implemented.

It may be understood that, in a process of performing exhaust on the pedal feel simulator 50, the second transmission subassembly 22 may remain in the connected state, or may remain in the disconnected state. In addition, because the fourth transmission subassembly 24 is disconnected, and the brake fluid cannot flow into the brake assembly 02, the fifth transmission subassembly 25 may remain in the connected state, or may remain in the disconnected state. A connection status of the second transmission subassembly 22 and a connection status of the fifth transmission subassembly 25 are not limited in this embodiment of this invention.

Optionally, refer to FIG. 12. The simulator control valve 27 may be connected to the first wheel cylinder control valve 3a in the third transmission subassembly 23. Correspondingly, in a process of adding liquid to the pedal feel simulator 50, the controller 40 may control only the first pressurizing control valve 1a in the first transmission subassembly 21 and the first wheel cylinder control valve 3a in the third transmission subassembly 23 to be turned on, and both the second pressurizing control valve 1b in the first transmission subassembly 21 and the second wheel cylinder control valve 3b in the third transmission subassembly 23 remain in the off state. In this way, a quantity of valves that need to be switched between an on state and an off state can be reduced to as much as possible, thereby reducing power consumption of the controller 40.

It may be further understood that the exhaust instruction obtained by the controller 40 may alternatively be an exhaust instruction for the system (namely, not an exhaust instruction for a specific component). In this case, the controller 40 may control the pressurizing assembly 10 and the brake fluid transmission assembly 20 to sequentially perform exhaust on the brake control assembly 30, the brake assembly 02, and the pedal feel simulator 50 based on the exhaust instruction. In addition, an exhaust sequence of the foregoing assembly is not limited in this embodiment of this invention.

Optionally, as shown in FIG. 2 to FIG. 12, the system may further include a first pressure sensor 60. The first pressure sensor 60 is connected to an infusion pipeline between the first transmission subassembly 21 and the fourth transmission subassembly 24. For example, the first pressure sensor 60 may be connected to an infusion pipeline between the second pressurizing control valve 1b and the second inlet valves 4c and 4d.

After controlling the pressurizing assembly 10 to output the brake fluid to the brake fluid transmission assembly 20 and controlling the brake fluid transmission assembly 20 to connect the pressurizing cylinder 13 to the brake control assembly 30 or the brake assembly 02, the controller 40 may further detect exhaust effect. In an optional implementation, the detection process is as follows:

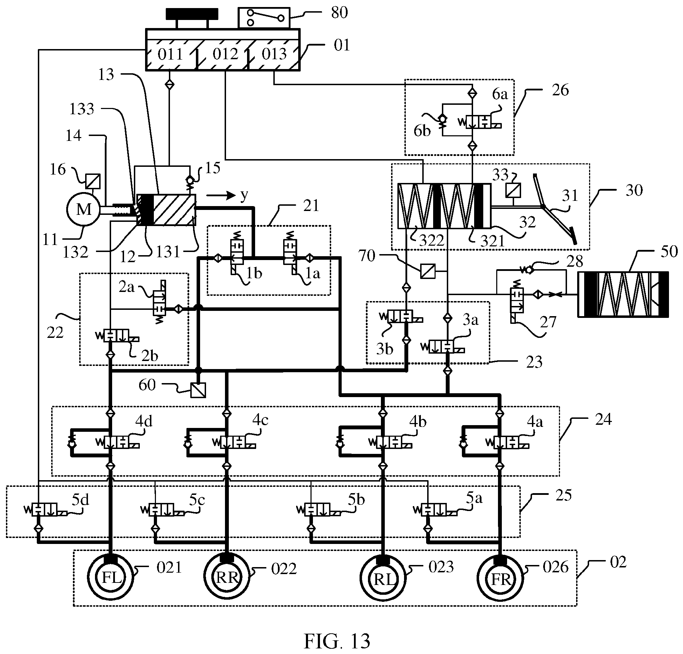

First, the controller 40 controls the first transmission subassembly 21 and the fourth transmission subassembly 24 to be connected, controls the third transmission subassembly 23 and the fifth transmission subassembly 25 to be disconnected, and controls the pressurizing assembly 10 to output brake fluid of a first target volume to the first transmission subassembly 21. At this time, as shown by a bold black line in FIG. 13, an infusion pipeline between the first cavity 131 of the pressurizing cylinder 13 and the fourth transmission subassembly 24 is conducted. The brake fluid of the first target volume in the first cavity 131 can flow into a brake wheel cylinder of the brake assembly 02.

Then, the controller 40 may obtain a pressure value collected by the first pressure sensor 60. If the controller 40 detects that the pressure value does not fall within a first pressure range corresponding to the first target volume, the controller 40 may output a first prompt indicating that exhausting gas fails. If the controller 40 detects that the pressure value falls within a first pressure range corresponding to the first target volume, the controller 40 may output a second prompt indicating that exhausting gas succeeds.

The first target volume may be a fixed value preconfigured in the controller 40. The first pressure range is a theoretical pressure range that needs to be reached by pressure in the infusion pipeline between the first cavity 131 and the fourth transmission subassembly 24 when the first cavity 131 of the pressurizing cylinder 13 discharges the brake fluid of the first target volume on a premise that an exhaust standard is met. That is, the controller 40 may compare a pressure value actually collected by the first pressure sensor 60 with a theoretical value, so as to determine whether the exhaust operation meets the exhaust standard.

Optionally, after controlling the pressurizing assembly 10 to output the brake fluid of the first target volume to the first transmission subassembly 21, the controller 40 may further first continuously monitor a pressure value collected by the first pressure sensor 60 within first target duration. If the controller 40 detects that a fluctuation amplitude that is of the pressure value collected by the first pressure sensor 60 and that is within the first target duration is less than a first amplitude threshold, the controller 40 may determine that the infusion pipeline has good air tightness. Further, whether the pressure value collected by the first pressure sensor 60 belongs to the first pressure range may be continuously detected. Both the first target duration and the first amplitude threshold may be fixed values preconfigured in the controller 40.

If the controller 40 detects that the brake fluid that is output by the pressurizing assembly 10 to the first transmission subassembly 21 reaches the first target volume, and a fluctuation amplitude that is of the pressure value collected by the first pressure sensor 60 and that is within the first target duration is not less than a first amplitude threshold, the controller 40 may output a third prompt indicating poor air tightness. For example, the third prompt may indicate that the infusion pipeline between the first cavity 131 and the fourth transmission subassembly 24 has poor air tightness. Further, the operator may detect and repair the infusion pipeline in time based on the third prompt.

In addition, because exhaust effect cannot be ensured when the air tightness of the infusion pipeline is poor, the controller 40 may no longer need to continue detecting whether the pressure value collected by the first pressure sensor 60 falls within the first pressure range.

Optionally, as shown in FIG. 2 to FIG. 13, the system may further include a second pressure sensor 70. The second pressure sensor 70 is connected to an infusion pipeline between the third transmission subassembly 23 and the front cavity 321 of the master cylinder 32. For example, the second pressure sensor 70 may be connected to the first wheel cylinder control valve 3a in the third transmission subassembly 23. In another optional implementation, a process of detecting the exhaust effect by the controller 40 may be as follows:

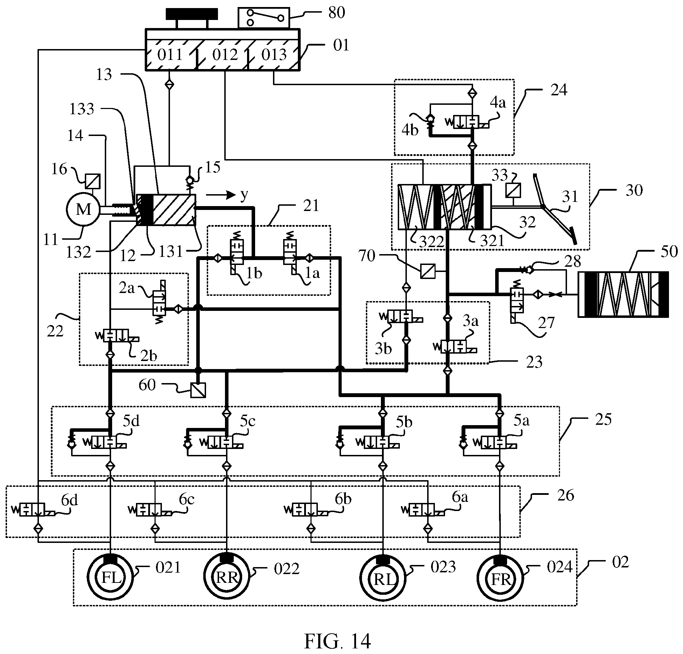

First, the controller 40 controls the first transmission subassembly 21 and the first wheel cylinder control valve 3a in the third transmission subassembly 23 to be connected, controls the second wheel cylinder control valve 3b in the third transmission subassembly 23, the fourth transmission subassembly 24, and the sixth transmission subassembly 26 to be disconnected, and controls the pressurizing assembly 10 to output brake fluid of a second target volume to the first transmission subassembly 21. At this time, refer to a bold black line in FIG. 14. An infusion pipeline between the first cavity 131 of the pressurizing cylinder 13 and the front cavity 321 of the master cylinder 32 is conducted. The brake fluid of the second target volume in the first cavity 131 can flow into the front cavity 321 of the master cylinder 32. However, due to the sixth transmission subassembly 26, the brake fluid cannot flow back to the reservoir 01.

Then, the controller 40 may obtain a pressure value collected by the second pressure sensor 70. If the controller 40 detects that the pressure value collected by the second pressure sensor 70 does not fall within a second pressure range corresponding to the second target volume, the controller 40 outputs a first prompt indicating that exhausting gas fails. If the controller 40 detects that the pressure value collected by the second pressure sensor 70 falls within a second pressure range corresponding to the second target volume, the controller 40 outputs a second prompt indicating that exhausting gas succeeds.

The second target volume is a fixed value preconfigured in the controller 40, and the second target volume may be equal to or different from the first target volume. The second pressure range is a theoretical pressure range that needs to be reached by pressure in the infusion pipeline between the first cavity 131 and the front cavity 321 of the master cylinder 32 when the first cavity 131 of the pressurizing cylinder 13 discharges the brake fluid of the second target volume on a premise that an exhaust standard is met. That is, the controller 40 may compare a pressure value actually collected by the second pressure sensor 70 with a theoretical value, so as to determine whether the exhaust operation meets the exhaust standard.

Optionally, after controlling the pressurizing assembly 10 to output the brake fluid of the second target volume to the first transmission subassembly 21, the controller 40 may further first continuously monitor a pressure value collected by the second pressure sensor 70 within second target duration. If the controller 40 detects that a fluctuation amplitude that is of the pressure value collected by the second pressure sensor 70 and that is within the second target duration is less than a second amplitude threshold, the controller 40 may determine that the infusion pipeline has good air tightness. Further, whether the pressure value collected by the second pressure sensor 70 belongs to the second pressure range may be continuously detected. Both the second target duration and the second amplitude threshold may be fixed values preconfigured in the controller 40. In addition, the second target duration may be equal to or different from the first target duration, and the second amplitude threshold may be equal to or different from the first amplitude threshold.

If the controller 40 detects that the brake fluid that is output by the pressurizing assembly 10 to the first transmission subassembly 21 reaches the second target volume, and a fluctuation amplitude that is of the pressure value collected by the second pressure sensor 70 and that is within the second target duration is not less than a second amplitude threshold, the controller 40 may output a third prompt indicating poor air tightness. For example, the third prompt may indicate that the infusion pipeline between the first cavity 131 and the front cavity 321 of the master cylinder 32 has poor air tightness. Because exhaust effect cannot be ensured when the air tightness of the infusion pipeline is poor, the controller 40 may no longer need to continue detecting whether the pressure value collected by the second pressure sensor 70 falls within the second pressure range.

It should be understood that, in a process of detecting the exhaust effect, it is necessary to ensure that the exhaust port in the brake assembly 02 is in the off state. For example, an operator may tighten an exhaust bolt in the exhaust port to seal the exhaust port.

In the hydraulic control system provided in this embodiment of this invention, because the pressurizing assembly 10 is implemented by using the motor 11, the piston 12, and the pressurizing cylinder 13, precise control of an outlet amount of the brake fluid can be implemented. Further, a pressure value collected by a pressure sensor can be used to accurately detect exhaust effect, so as to avoid a dangerous working condition caused because the exhaust operation does not meet the exhaust standard.

It may be understood that the hydraulic control system provided in this embodiment of this invention may include both the first pressure sensor 60 and the second pressure sensor 70. Therefore, the controller 40 may detect the exhaust effect by using any one of the foregoing implementations, or may detect the exhaust effect by separately using the foregoing two implementations, thereby effectively improving accuracy and flexibility of exhaust effect detection. Because the first pressure sensor 60 is located in a brake circuit, the first pressure sensor 60 may also be referred to as a brake circuit pressure sensor (brake circuit pressure sensor, BCPS). Because the second pressure sensor 70 is connected to the master cylinder 32, the second pressure sensor 70 may also be referred to as a master cylinder pressure sensor (master cylinder pressure sensor, MCPS). In addition, both the two pressure sensors may be integrated pressure sensors (integrated pressure sensors, IPTs).

It may be further understood that the pressure value collected by the pressure sensor can accurately reflect rigidity of the infusion pipeline, and rigidity when gas exists in the infusion pipeline is significantly different from that when gas does not exist in the infusion pipeline. Therefore, the controller 40 can accurately determine whether the exhaust operation meets the exhaust standard based on the pressure value collected by the pressure sensor.

It may be further understood that, after the controller 40 outputs the second prompt, the operator may determine, based on the second prompt, whether exhaust needs to be performed again. If it is necessary to perform exhaust again, the operator may trigger the exhaust instruction again. Alternatively, the operator may perform fault detection on the hydraulic brake system based on the second prompt.

In this embodiment of this invention, refer to FIG. 2 to FIG. 14. The pressurizing assembly 10 may further include a motor position sensor (motor position sensor, MPS) 16. The motor position sensor 16 is separately connected to the controller 40 and the motor 11, and the motor position sensor 16 may be configured to detect a rotation position of the motor 11. Correspondingly, the controller 40 may determine, based on the rotation position that is of the motor 11 and that is detected by the motor position sensor 16, a movement stroke of the piston 12, and further may determine a volume of brake fluid discharged from the pressurizing cylinder 13 to the first transmission subassembly 21. For example, the controller 40 may determine the volume of the brake fluid discharged from the pressurizing cylinder 13 by multiplying a cross-sectional area of the pressurizing cylinder 13 by the stroke of the piston 12 moving in the second direction y. The cross-sectional area is an area of a cross section that is of the pressurizing cylinder 13 and that is perpendicular to the second direction y.

Optionally, in this embodiment of this invention, the controller 40 may be further connected to a prompter. The controller 40 may output the first prompt, the second prompt, or the third prompt to the prompter, and the prompter may play the received prompt. For example, the prompter may be an in-vehicle display, and the first prompt, the second prompt, and the third prompt may be text prompts or picture prompts. Alternatively, the prompter may be a speaker, and the first prompt, the second prompt, and the third prompt may be language prompts. Alternatively, the prompter may be a light emitting device (for example, a light emitting diode), and the first prompt, the second prompt, and the third prompt may all be light prompts. Alternatively, the prompter may be a combination of at least two types of devices of an in-vehicle display, a speaker, and a light emitting device.

Optionally, as shown in FIG. 1, the system further includes an infusion pipeline for transmitting the brake fluid. The controller 40 may be further configured to: in a process in which the pressurizing assembly 10 outputs the brake fluid to the brake fluid transmission assembly 20 (namely, a process of performing the exhaust operation), if it is detected that a pressure value of the infusion pipeline is greater than a pressure threshold, control the pressurizing assembly 10 to perform a pressure reduction operation.

For example, refer to FIG. 2 to FIG. 14. In a process of performing the exhaust operation, the controller 40 may obtain a pressure value collected by the first pressure sensor 60, and obtain a pressure value collected by the second pressure sensor 70. If the controller 40 detects that a pressure value collected by any pressure sensor is greater than a pressure threshold, the controller 40 may control the pressurizing assembly 10 to perform the pressure reduction operation.

The pressure reduction operation may include: The motor 11 drives the piston 12 to move in the first direction x. That is, the controller 40 may reduce the pressure value of the infusion pipeline by controlling the piston 12 to retract.

The controller 40 monitors the pressure value of the infusion pipeline during the exhaust process, and controls the pressurizing assembly 10 to perform the pressure reduction operation in time when the pressure value is excessively large. Therefore, a dangerous working condition of a pressure sudden change caused by factors such as pipeline blockage can be effectively avoided, and safety of the exhaust process can be ensured.

Optionally, the controller 40 may be further configured to control the pressurizing assembly 10 and the brake fluid transmission assembly 20 to repeatedly perform an exhaust operation for a target quantity of times based on the exhaust instruction, where the target quantity of times is greater than 1, and the exhaust operation includes: the pressurizing assembly 10 outputs brake fluid to the brake fluid transmission assembly 20, and the brake fluid transmission assembly 20 connects the pressurizing cylinder 13 to the brake control assembly 30 or the brake assembly 02.

The target quantity of times is a fixed value preconfigured in the controller 40, and the target quantity of times is an integer greater than 1. For example, the target quantity of times may be 4 or 5. The controller 40 may effectively ensure exhaust effect by controlling the pressurizing assembly 10 and the brake fluid transmission assembly 20 to repeatedly perform the exhaust operation for a plurality of times. Each exhaust operation may also be referred to as one pressure building operation.

Optionally, the controller 40 may be configured to: control the pressurizing assembly 10 to output the brake fluid to the brake fluid transmission assembly 20 at a first rate when the exhaust operation is performed for the n^{th} time, and output the brake fluid to the brake fluid transmission assembly 20 at a second rate when the exhaust operation is performed for the (n+1)^{th} time, where n is a positive integer less than the target quantity of times, and the second rate is greater than the first rate.

Since pressure in the infusion pipeline in the hydraulic brake system tends to be stable as the quantity of times the exhaust operation is performed increases, the controller 40 may control the pressurizing assembly 10 to gradually increase a rate at which the brake fluid is output.

For example, n may be equal to 1. In addition, if the target quantity of times is greater than n+1 (that is, greater than 2), the controller 40 may control the pressurizing assembly 10 to output the brake fluid to the brake fluid transmission assembly 20 at the second rate when the exhaust operation is performed for the (n+2)^{th} time to the target quantity of times. That is, the controller 40 may control the pressurizing assembly 10 to output the brake fluid at a low rate when the exhaust operation is performed for the first time, so as to ensure safety during the first exhaust. Then, the controller 40 may control the pressurizing assembly 10 to output the brake fluid at a high rate to ensure exhaust efficiency.

Optionally, as shown in FIG. 2 to FIG. 14, the system may further include a liquid level sensor 80 located in the reservoir 01 and connected to the controller 40. The liquid level sensor 80 is also referred to as a reservoir level sensor (reservoir level sensor, RLS). The controller 40 may be further configured to: obtain a liquid level of the reservoir that is collected by the liquid level sensor 80, and output a fourth prompt if the liquid level of the reservoir is less than a liquid level threshold. The fourth prompt may be used to prompt the operator to replenish brake fluid for the reservoir 01 in time, so as to ensure that a subsequent exhaust operation can be normally performed.

It should be understood that an output manner of the fourth prompt may be the same as an output manner of the first prompt to an output manner of the third prompt. Details are not described in this embodiment of this invention again.

As shown in FIG. 2 to FIG. 14, it can be learned that the reservoir 01 may include a first liquid storage cavity 011, a second liquid storage cavity 012, and a third liquid storage cavity 013 that are spaced apart. Both the pressurizing cylinder 12 in the pressurizing assembly 10 and the fifth transmission subassembly 25 may be connected to the first liquid storage cavity 011. The rear cavity 322 of the master cylinder 32 in the brake control assembly 30 may be connected to the second liquid storage cavity 012. The sixth transmission subassembly 26 may be connected to the third liquid storage cavity 013.

The liquid level sensor 80 may be located in the first liquid storage cavity 011, and is configured to detect a liquid level of the first liquid storage cavity 011, so as to ensure reliable execution of the exhaust operation. Alternatively, the system may include a plurality of liquid level sensors 80, and one liquid level sensor 80 may be disposed in each liquid storage cavity of the reservoir 01.

By dividing the reservoir 01 into a plurality of different liquid storage cavities and connecting different components to different liquid storage cavities, impact on another liquid storage cavity can be avoided after a failure (for example, leakage) of an infusion pipeline connected to any liquid storage cavity, to ensure that a component connected to the another liquid storage cavity is still functioning properly. In addition, when gas exists in the infusion pipeline connected to any liquid storage cavity, the gas in the infusion pipeline may temporarily exist in the liquid storage cavity connected to the infusion pipeline, thereby reducing impact on the another liquid storage cavity. Moreover, it is possible to avoid contaminating brake fluid in the another liquid storage cavity when impurities are deposited in any liquid storage cavity. Based on the foregoing analysis, it can be learned that the reservoir 01 is divided into the plurality of different liquid storage cavities to implement fault isolation and effectively improve reliability of the hydraulic brake system.

Optionally, refer to FIG. 2 to FIG. 14. The brake control assembly 30 further includes a pedal travel sensor (pedal travel sensor, PTS) 33 connected to the brake pedal 31. The pedal travel sensor 33 is configured to detect displacement of the brake pedal 31.

The sixth transmission subassembly 26 may include a master cylinder test valve 6a, and a check valve 6b in parallel with the master cylinder test valve 6a. The master cylinder test valve may also be referred to as a test simulation valve (test simulate valve, TPS). The master cylinder test valve 6a is connected to the controller 40, and the controller 40 can control an on/off state between the reservoir 01 and the front cavity 321 of the master cylinder 32 by controlling an on/off state of the master cylinder test valve 6a. The check valve 6b may allow the brake fluid in the reservoir 01 to flow into the front cavity 321 of the master cylinder 32, and may prevent the brake fluid in the front cavity 321 from flowing back to the reservoir 01. Thus, it can be ensured that when the master cylinder test valve 6a fails, the reservoir 01 may further replenish liquid for the master cylinder 32 through the check valve 6b, so as to avoid affecting braking performance.

Refer to FIG. 2 to FIG. 14. The fourth transmission subassembly 24 may further include a plurality of check valves in a one-to-one correspondence with the plurality of liquid inlet valves, and each check valve is connected in parallel to a corresponding liquid inlet valve. Each check valve is capable of allowing the brake fluid to flow out of the brake wheel cylinder and preventing the brake fluid from flowing into the brake wheel cylinder. By setting a check valve in parallel with a liquid inlet valve, it can be ensured that the brake fluid in the brake wheel cylinder can also flow out of the brake wheel cylinder when the liquid inlet valve fails, so as to avoid affecting normal traveling of the vehicle.

It may be understood that in the hydraulic brake system provided in this embodiment of this invention, valves included in the first transmission subassembly 21, the second transmission subassembly 22, and the fifth transmission subassembly 25 and the simulator control valve 27 may all be normal close valves (normal close valves, NCs). Valves included in the third transmission subassembly 23, the fourth transmission subassembly 24, and the sixth transmission subassembly 26 may all be normal open valves (normal open valves, NOs).

It may be further understood that the hydraulic brake system provided in this embodiment of this invention is an electro-hydraulic brake system, namely, a wire-controlled brake system. The wire-controlled brake system may control rotation of the motor 11 by recognizing braking intention or a braking instruction by the controller, and convert a rotating motion of the motor 11 into a linear motion of the piston 12, thereby realizing braking assistance and active braking. In addition, the hydraulic brake system provided in this embodiment of this invention may further implement pedal force adjustment.

In conclusion, this embodiment of this invention provides a hydraulic brake system. A pressurizing assembly in the system can output brake fluid to a brake fluid transmission assembly under control of a controller. The brake fluid transmission assembly can connect the pressurizing assembly with a brake control assembly or a brake assembly under the control of the controller, so as to implementing exhaust for the brake control assembly or the brake assembly. Because the controller can control the pressurizing assembly and the brake fluid transmission assembly to automatically perform an exhaust operation, and the exhaust process does not require manually stepping on a brake pedal, the controller is applicable to a wire-controlled brake system of a future vehicle (for example, an intelligent driving vehicle). Moreover, because the pressurizing assembly is realized by using a motor, a piston and a pressurizing cylinder, fine control of an outlet amount of the brake fluid can be realized.

In addition, the hydraulic brake system provided in this embodiment of this invention further has the following technical effect.

First, automatic exhaust operation may eliminate random errors and misoperations in manual exhaust operation, ensure consistency of exhaust effect at all times, and improve braking efficiency and safety.

Second, related parameters of the exhaust process (for example, a target quantity of times, a pressure range, and a pressure threshold) can be flexibly configured and can be applied to different types of integrated wire-controlled brake systems with good compatibility.

Third, the controller may adjust a rate at which the pressurizing assembly discharges the brake fluid, thereby realizing a combination of fast exhaust and slow exhaust, thereby improving exhaust efficiency while ensuring exhaust effect and safety.

Fourth, pressure of an infusion pipeline can be detected in real time during the exhaust process to avoid a dangerous working condition of high pressure caused by a misoperation.

Fifth, based on different types of exhaust instructions, flexible exhaust for different components can save exhaust time and improve exhaust efficiency. In addition, due to a requirement of an application scenario, exhaust is performed on only a part of a cavity of a master cylinder, or on only a part of a brake wheel cylinder. Therefore, precise and efficient exhaust can be implemented, and waste of brake fluid can be effectively reduced.

Sixth, the exhaust effect can be detected after the exhaust operation is completed, so that an operator may determine whether it is necessary to re-exhaust or perform fault detection, thus avoiding a dangerous working condition caused by no exhaust effect detection after the exhaust operation.

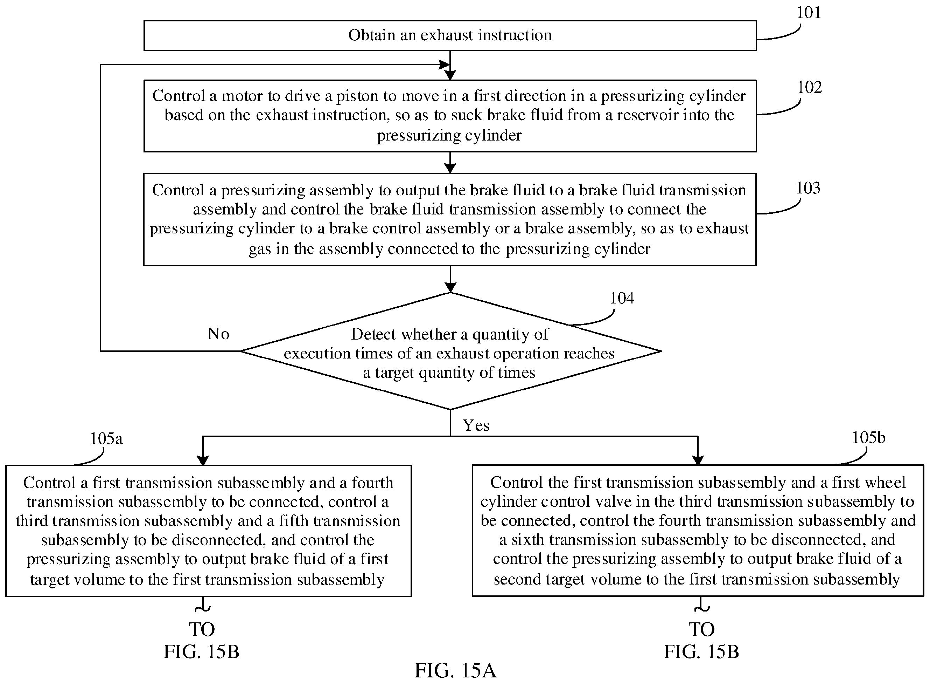

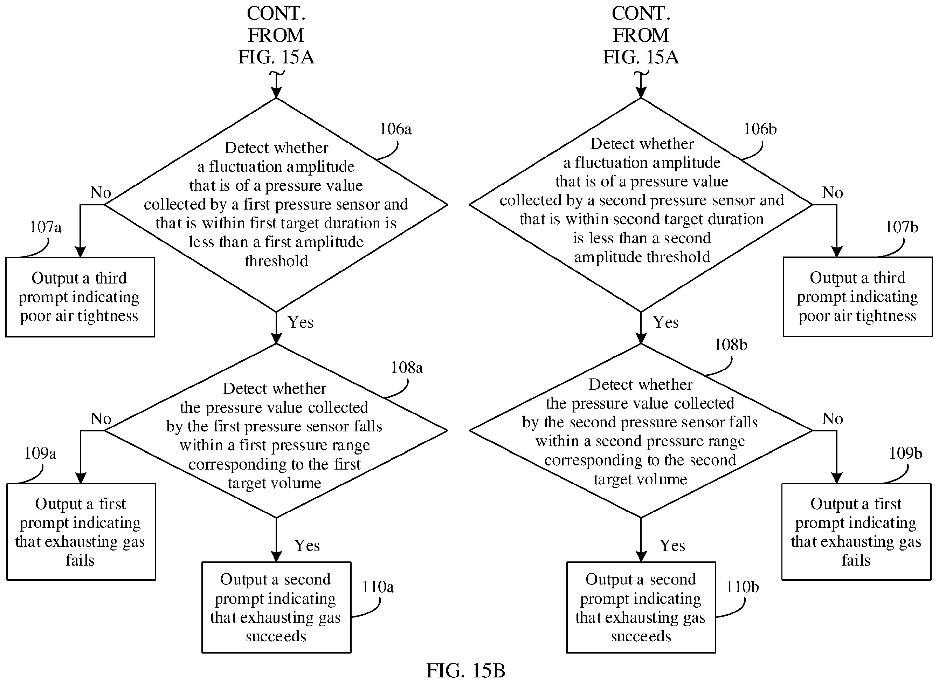

An embodiment of this invention further provides an exhaust control method of a hydraulic brake system. The method may be applied to the controller 40 in the hydraulic brake system provided in the foregoing embodiment. Refer to FIG. 15A and FIG. 15B. The method includes the following steps.

Step 101: Obtain an exhaust instruction.

In this embodiment of this invention, a controller may obtain the exhaust instruction in a plurality of different manners. For example, the controller may obtain the exhaust instruction when detecting a touch operation for a specific touch button. The specific touch button may be a virtual button on a vehicle-mounted control panel, or may be a physical button on a vehicle. Alternatively, the controller 40 may be further connected to an external vehicle diagnostic instrument, and the controller 40 may receive the exhaust instruction sent by the vehicle diagnostic instrument. Alternatively, the controller 40 may further obtain the exhaust instruction when detecting a specific combined operation performed on the brake control assembly 30 (for example, stepping on a brake pedal for a plurality of times at a specific interval).

Step 102: Control a motor to drive a piston to move in a first direction in a pressurizing cylinder based on the exhaust instruction, so as to suck brake fluid from a reservoir into the pressurizing cylinder.

The controller can control the motor to rotate in response to the exhaust instruction, and the rotation of the motor can be converted into a linear motion of the piston, so that the brake fluid can be sucked from the reservoir into the pressurizing cylinder.

Step 103: Control a pressurizing assembly to output the brake fluid to a brake fluid transmission assembly and control the brake fluid transmission assembly to connect the pressurizing cylinder to the brake control assembly or a brake assembly, so as to exhaust gas in the assembly connected to the pressurizing cylinder.

For example, the controller may control the motor to drive the piston to move in a second direction in the pressurizing cylinder, so as to output the brake fluid in the pressurizing cylinder to the brake fluid transmission assembly. The first direction is opposite to the second direction.

Optionally, a second end of the piston may divide the pressurizing cylinder into a first cavity and a second cavity, and both the first cavity and the second cavity are connected to the reservoir. The brake control assembly includes the brake pedal and a master cylinder connected to the brake pedal. The brake fluid transmission assembly includes a first transmission subassembly, a second transmission subassembly, a third transmission subassembly, a fourth transmission subassembly, and a fifth transmission subassembly. The first transmission subassembly is separately connected to the first cavity, the third transmission subassembly, and the fourth transmission subassembly, the second transmission subassembly is separately connected to the second cavity, the third transmission subassembly, and the fourth transmission subassembly, the third transmission subassembly is further separately connected to the fourth transmission subassembly and the master cylinder, the fourth transmission subassembly is further connected to the brake assembly, and the fifth transmission subassembly is further connected to the reservoir and the brake assembly.

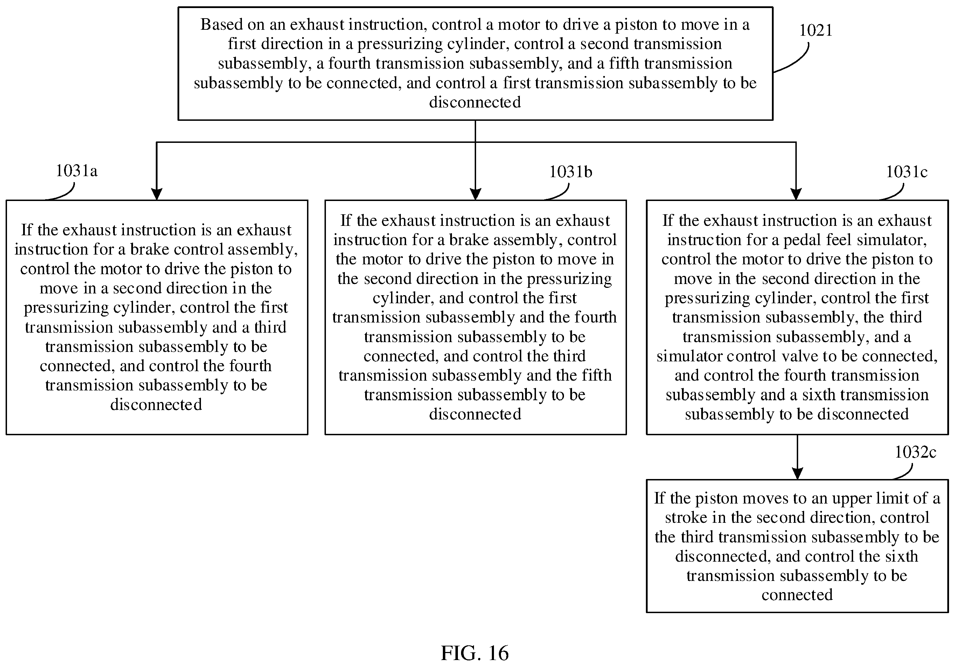

Optionally, refer to FIG. 16. Step 103 may include the following steps.

Step 1021: Based on the exhaust instruction, control the motor to drive the piston to move in the first direction in the pressurizing cylinder, control the second transmission subassembly, the fourth transmission subassembly, and the fifth transmission subassembly to be connected, and control the first transmission subassembly to be disconnected.

Optionally, a plurality of brake wheel cylinders in the brake assembly include at least one first brake wheel cylinder and at least one second brake wheel cylinder. The first brake wheel cylinder is separately connected to a first liquid inlet valve of a plurality of liquid inlet valves included in the fourth transmission subassembly and a first liquid outlet valve of a plurality of liquid outlet valves included in the fifth transmission subassembly. The second brake wheel cylinder is separately connected to a second liquid inlet valve in the plurality of liquid inlet valves included in the fourth transmission subassembly and a second liquid outlet valve in the plurality of liquid outlet valves included in the fifth transmission subassembly. The second transmission subassembly includes a first liquid suction control valve and a second liquid suction control valve. The first liquid suction control valve is separately connected to the second cavity and the first liquid inlet valve, and the second liquid suction control valve is separately connected to the second cavity and the second liquid inlet valve.

In step 1021, a process of controlling the second transmission subassembly, the fourth transmission subassembly, and the fifth transmission subassembly to be connected may be implemented by using at least one of the following operations.

Operation 3.1: Control the second liquid suction control valve, the second liquid inlet valve, and the second liquid outlet valve to be turned on, and control the first liquid suction control valve, the first liquid inlet valve, and the first liquid outlet valve to be turned off.

Operation 3.2: Control the first liquid suction control valve, the first liquid inlet valve, and the first liquid outlet valve to be turned on, and control the second liquid suction control valve, the second liquid inlet valve, and the second liquid outlet valve to be turned off.

Operation 3.3: Control the first liquid suction control valve, the first liquid inlet valve, the first liquid outlet valve, the second liquid suction control valve, the second liquid inlet valve, and the second liquid outlet valve to be turned on.

Optionally, in step 103, a process in which the controller controls the brake fluid transmission assembly to connect the pressurizing assembly to the brake control assembly or the brake assembly may include:
controlling the motor to drive the piston to move in the second direction in the pressurizing cylinder, controlling the second transmission subassembly to be disconnected, controlling the first transmission subassembly to be connected, and controlling the third transmission subassembly or the fourth transmission subassembly to be connected.

Still refer to FIG. 16. Step 103 may include the following steps.

Step 1031a: If the exhaust instruction is an exhaust instruction for the brake control assembly, control the motor to drive the piston to move in the second direction in the pressurizing cylinder, control the first transmission subassembly and the third transmission subassembly to be connected, and control the fourth transmission subassembly to be disconnected.

Optionally, the brake control assembly further includes a sixth transmission subassembly. The master cylinder includes a front cavity and a rear cavity, where the front cavity is closer to the brake pedal than the rear cavity, the front cavity is connected to the reservoir by using the sixth transmission subassembly, and the rear cavity is connected to the reservoir. The third transmission subassembly includes a first wheel cylinder control valve and a second wheel cylinder control valve, where the first wheel cylinder control valve is separately connected to the front cavity, the first transmission subassembly and the fourth transmission subassembly, and the second wheel cylinder control valve is separately connected to the rear cavity, the first transmission subassembly, and the fourth transmission subassembly.

Therefore, step 1031a may be implemented by using at least one of the following operations.

Operation 1.1: Control the first transmission subassembly, the first wheel cylinder control valve, the second wheel cylinder control valve, and the sixth transmission subassembly to be connected, and control the fourth transmission subassembly to be disconnected.

Operation 1.2: Control the first transmission subassembly and the second wheel cylinder control valve to be connected, and control the first wheel cylinder control valve and the fourth transmission subassembly to be disconnected.

Operation 1.3: Control the first transmission subassembly, the first wheel cylinder control valve, and the sixth transmission subassembly to be connected, and control the second wheel cylinder control valve and the fourth transmission subassembly to be disconnected.

Operation 1.4: Control the first transmission subassembly and the first wheel cylinder control valve to be connected, and control the second wheel cylinder control valve, the fourth transmission subassembly, and the sixth transmission subassembly to be disconnected.

Optionally, in this embodiment of this invention, the exhaust instruction for the brake control assembly may be an exhaust instruction for a target cavity of the master cylinder. Correspondingly, the controller may perform exhaust on the target cavity of the master cylinder based on the exhaust instruction. For example, if the target cavity is the front cavity of the master cylinder, the controller may perform the operation 1.3, so as to implement separate exhaust for the front cavity of the master cylinder. If the target cavity is the rear cavity of the master cylinder, the controller may perform the operation 1.2 or 1.4, so as to implement separate exhaust for the rear cavity of the master cylinder. If the target cavity includes the front cavity and the rear cavity of the master cylinder, the controller may perform the operation 1.1, so as to implement simultaneous exhaust for the front cavity and the rear cavity of the master cylinder.

Step 1031b: If the exhaust instruction is an exhaust instruction for the brake assembly, control the motor to drive the piston to move in the second direction in the pressurizing cylinder, control the first transmission subassembly and the fourth transmission subassembly to be connected, and control the third transmission subassembly and the fifth transmission subassembly to be disconnected.

Optionally, the brake assembly includes a plurality of brake wheel cylinders, the fourth transmission subassembly includes a plurality of liquid inlet valves connected to the plurality of brake wheel cylinders in a one-to-one correspondence, and the fifth transmission subassembly includes a plurality of liquid outlet valves connected to the plurality of brake wheel cylinders in a one-to-one correspondence.

Correspondingly, in step 1031b, the controller may control a liquid inlet valve connected to at least one brake wheel cylinder to be turned on and a liquid outlet valve connected to the brake wheel cylinder to be turned off.

Optionally, the exhaust instruction may be an exhaust instruction for at least one target brake wheel cylinder in the brake assembly. Correspondingly, in step 1031b, a process in which the controller controls at least one liquid inlet valve in the plurality of liquid inlet valves to be turned on includes:
controlling at least one target liquid inlet valve in the plurality of liquid inlet valves to be turned on, where the at least one target liquid inlet valve is a liquid inlet valve connected to the at least one target brake wheel cylinder.

In addition, step 1031b may further include: controlling a liquid inlet valve other than the at least one target liquid inlet valve to be turned off.

As shown in FIG. 2 to FIG. 14, it can be learned that the brake assembly 02 may include four brake wheel cylinders, and step 1031b may be implemented by using at least one of the 15 exhaust modes shown in Table 1.

Optionally, the hydraulic brake system provided in this embodiment of this invention may further include a pedal feel simulator. The brake fluid transmission assembly further includes a simulator control valve. The simulator control valve is separately connected to the pedal feel simulator, the front cavity of the master cylinder, and the third transmission subassembly. Correspondingly, as shown in FIG. 16, in step 103, the controller may further perform the following operations in a process in which the motor drives the piston to move in the second direction in the pressurizing cylinder.

Step 1031c: If the exhaust instruction is an exhaust instruction for the pedal feel simulator, control the motor to drive the piston to move in the second direction in the pressurizing cylinder, control the first transmission subassembly, the third transmission subassembly, and the simulator control valve to be connected, and control the fourth transmission subassembly and the sixth transmission subassembly to be disconnected.

Step 1032c: If the piston moves to an upper limit of a stroke in the second direction, control the third transmission subassembly to be disconnected, and control the sixth transmission subassembly to be connected.

Still refer to FIG. 15A and FIG. 15B. After step 103, the method may further include the following steps.

Step 104: Detect whether a quantity of execution times of the exhaust operation reaches a target quantity of times.

Each exhaust operation includes: The pressurizing assembly outputs the brake fluid to the brake fluid transmission assembly, and the brake fluid transmission assembly connects the pressurizing cylinder to the brake control assembly or the brake assembly. In this embodiment of this invention, each time after controlling the pressurizing assembly and the brake fluid transmission assembly to perform one exhaust operation, the controller may detect whether the quantity of execution times of the exhaust operation reaches the target quantity of times, where the target quantity of times is greater than 1. If the quantity of execution times of the exhaust operation does not reach the target quantity of times, the controller may continue to perform step 102 and step 103. In other words, in this embodiment of this invention, each time after obtaining the exhaust instruction, the controller may control the pressurizing assembly and the brake fluid transmission assembly to repeatedly perform the exhaust operation for the target quantity of times.

Optionally, in step 103, the controller may further control the pressurizing assembly to output the brake fluid to the brake fluid transmission assembly at a first rate when the exhaust operation is performed for the n^{th} time, and control the pressurizing assembly to output the brake fluid to the brake fluid transmission assembly at a second rate when the exhaust operation is performed for the (n+1)^{th} time. Herein, n is a positive integer less than the target quantity of times, and the second rate is greater than the first rate. For example, n may be equal to 1.

In the foregoing step 104, if the controller detects that the quantity of execution times of the exhaust operation reaches the target quantity of times, the controller may continue to detect exhaust effect. The detection process of the exhaust effect may be implemented by the following step 105a and step 106a and/or step 105b and step 106b.

Optionally, the system may further include a first pressure sensor. The first pressure sensor is connected to an infusion pipeline between the first transmission subassembly and the fourth transmission subassembly. In an optional implementation, the detection process of the exhaust effect may include the following steps.

Step 105a: Control the first transmission subassembly and the fourth transmission subassembly to be connected, control the third transmission subassembly and the fifth transmission subassembly to be disconnected, and control the pressurizing assembly to output brake fluid of a first target volume to the first transmission subassembly.

Step 106a: Detect whether a fluctuation amplitude that is of a pressure value collected by the first pressure sensor and that is within first target duration is less than a first amplitude threshold.

If the fluctuation amplitude of the pressure value within the first target duration is not less than the first amplitude threshold, step 107a is performed. If the fluctuation amplitude of the pressure value within the first target duration is less than the first amplitude threshold, step 108a is performed.

Step 107a: Output a third prompt indicating poor air tightness.

If the fluctuation amplitude of the pressure value within the first target duration is not less than the first amplitude threshold, the controller may determine that the infusion pipeline has poor air tightness, and may output the third prompt.

Step 108a: Detect whether the pressure value collected by the first pressure sensor falls within a first pressure range corresponding to the first target volume.

If it is detected that the pressure value collected by the first pressure sensor does not fall within the first pressure range corresponding to the first target volume, step 109a is performed. If it is detected that the pressure value collected by the first pressure sensor falls within the first pressure range corresponding to the first target volume, step 110a is performed.

Step 109a: Output a first prompt indicating that exhausting gas fails.

If the controller detects that the pressure value collected by the first pressure sensor does not fall within the first pressure range corresponding to the first target volume, the controller may determine that exhausting gas fails, and output the first prompt.

Step 110a: Output a second prompt indicating that exhausting gas succeeds.

If the controller detects that the pressure value collected by the first pressure sensor falls within the first pressure range corresponding to the first target volume, the controller may determine that exhausting gas succeeds, and output the second prompt.

Optionally, the system further includes a second pressure sensor. The second pressure sensor is connected to an infusion pipeline between the third transmission subassembly and the front cavity of the master cylinder. In another optional implementation, the detection process of the exhaust effect may include the following steps.

Step 105b: Control the first transmission subassembly and the first wheel cylinder control valve in the third transmission subassembly to be connected, control the fourth transmission subassembly and the sixth transmission subassembly to be disconnected, and control the pressurizing assembly to output brake fluid of a second target volume to the first transmission subassembly.

Step 106b: Detect whether a fluctuation amplitude that is of a pressure value collected by the second pressure sensor and that is within second target duration is less than a second amplitude threshold.

If the fluctuation amplitude of the pressure value within the second target duration is not less than the second amplitude threshold, step 107b is performed. If the fluctuation amplitude of the pressure value within the second target duration is less than the second amplitude threshold, step 108b is performed.

Step 107b: Output a third prompt indicating poor air tightness.

If the fluctuation amplitude of the pressure value within the second target duration is not less than the second amplitude threshold, the controller may determine that the infusion pipeline has poor air tightness, and may output the third prompt.

Step 108b: Detect whether the pressure value collected by the second pressure sensor falls within a second pressure range corresponding to the second target volume.

If it is detected that the pressure value collected by the second pressure sensor does not fall within the second pressure range corresponding to the second target volume, step 109b is performed. If it is detected that the pressure value collected by the second pressure sensor falls within the second pressure range corresponding to the second target volume, step 110b is performed.

Step 109b: Output a first prompt indicating that exhausting gas fails.

If the controller detects that the pressure value collected by the second pressure sensor does not fall within the second pressure range corresponding to the second target volume, the controller may determine that exhausting gas fails, and output the first prompt.

Step 110b: Output a second prompt indicating that exhausting gas succeeds.

If the controller detects that the pressure value collected by the second pressure sensor falls within the second pressure range corresponding to the second target volume, the controller may determine that exhausting gas succeeds, and output the second prompt.

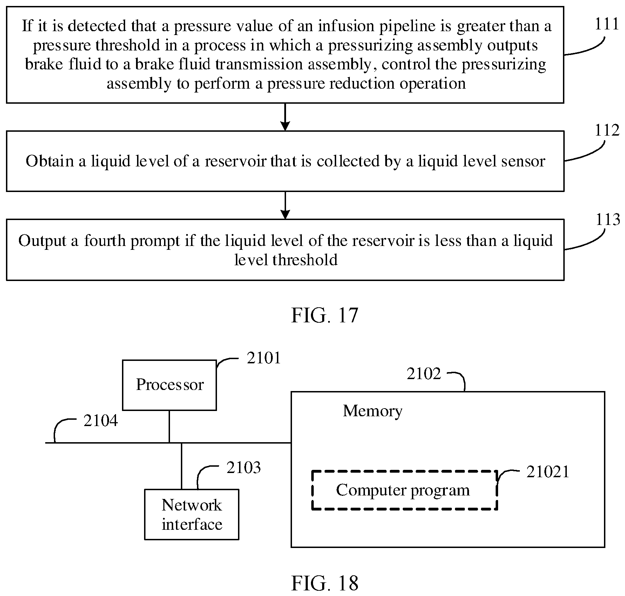

Optionally, refer to FIG. 17. The exhaust control method provided in this embodiment of this invention may further include the following steps.

Step 111: If it is detected that a pressure value of the infusion pipeline is greater than a pressure threshold in a process in which the pressurizing assembly outputs the brake fluid to the brake fluid transmission assembly, control the pressurizing assembly to perform a pressure reduction operation.

Optionally, the system further includes a liquid level sensor located in the reservoir and connected to the controller. Still refer to FIG. 17. The method further includes the following steps.

Step 112: Obtain a liquid level of the reservoir that is collected by the liquid level sensor.

Step 113: Output a fourth prompt if the liquid level of the reservoir is less than a liquid level threshold.

The fourth prompt may be used to prompt an operator to replenish brake fluid for the reservoir in time.

It may be understood that step 111 and step 112 may be performed synchronously with step 103. It may be further understood that sequences of the steps of the exhaust control method provided in the embodiment of this invention may be appropriately adjusted, or steps may be correspondingly added or deleted based on a situation. For example, step 104 may be deleted based on a situation, that is, the controller may control the pressurizing assembly and the brake fluid transmission assembly to perform one exhaust operation. Alternatively, step 105a to step 109a, and/or step 105b to step 109b may be deleted based on a situation, that is, the controller may detect the exhaust effect in only one manner, or may not detect the exhaust effect. Alternatively, step 111 to step 113 may be deleted based on a situation. Alternatively, step 112 and step 113 may be performed before step 111. Alternatively, after step 1021, the controller may sequentially perform step 1031a, step 1031b, and step 1031c (where an execution sequence is not limited). That is, the controller does not need to determine a type of the exhaust instruction, and may sequentially perform exhaust on each component.

It can be clearly understood by a person skilled in the art that, for a purpose of convenient and brief description, for a specific operation process of the exhaust control method described above, refer to the related description in the foregoing system embodiment. Details are not described herein again.

In conclusion, an embodiment of this invention provides an exhaust control method. Because a controller can control a pressurizing assembly and a brake fluid transmission assembly in a hydraulic brake system to automatically perform an exhaust operation, and the exhaust process does not require manually stepping on a brake pedal, the controller is applicable to a wire-controlled brake system of a future vehicle (for example, an intelligent driving vehicle). Moreover, because the pressurizing assembly is realized by using a motor, a piston and a pressurizing cylinder, fine control of an outlet amount of brake fluid can be realized.

In addition, the method provided in this embodiment of this invention may further eliminate random errors and misoperations in manual exhaust operation, ensure consistency of exhaust effect at all times, and improve braking efficiency and safety.

Moreover, because the controller may further flexibly perform precise exhaust on different components in the hydraulic brake system based on different types of exhaust instructions, waste of brake fluid can be effectively reduced.

FIG. 18 is a schematic diagram of a structure of a controller according to an embodiment of this invention. The controller may be applied to the hydraulic brake system provided in the foregoing embodiments. Refer to FIG. 18. The controller may include a processor 2101, a memory 2102, a network interface 2103, and a bus 2104. The bus 2104 is configured to connect the processor 2101, the memory 2102, and the network interface 2103. A communication connection to another device may be implemented through the network interface 2103 (which may be wired or wireless). The memory 2102 stores a computer program 21021. The computer program 21021 is used to implement various application functions.

It should be understood that, in this embodiment of this invention, the processor 2101 may be a CPU, or the processor 2101 may be another general-purpose processor, a digital signal processor (DSP), an application-specific integrated circuit (ASIC), a field-programmable gate array (FPGA), a GPU or another programmable logic device, a discrete gate or a transistor logic device, a discrete hardware component, or the like. The general-purpose processor may be a microprocessor, any conventional processor, or the like.

The memory 2102 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation example, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In addition to a data bus, the bus 2104 may further include a power bus, a control bus, a state signal bus, and the like. However, for clarity of description, various buses are marked as the bus 2104 in the figure.

The processor 2101 is configured to execute the computer program stored in the memory 2102, and the processor 2101 executes the computer program 21021 to implement a function of the controller described above, that is, implement the exhaust control method provided in the foregoing embodiments.

An embodiment of this invention further provides another controller. The controller may be applied to the hydraulic control system provided in the foregoing embodiments. The controller may include a programmable logic circuit and/or program instructions, and the controller may be configured to implement steps in the foregoing method embodiments.

It should be understood that the controller in the hydraulic control system provided in this embodiment of this invention may be implemented by using an application-specific integrated circuit (application-specific integrated circuit, ASIC), or a programmable logic device (programmable logic device, PLD). The PLD may be a complex programmable logic device (complex programmable logic device, CPLD), a field-programmable gate array (field-programmable gate array, FPGA), a generic array logic (generic array logic, GAL), or any combination thereof. Certainly, a function of the foregoing controller may also be implemented by using software. When the function of the foregoing controller is implemented by using the software, modules that are in the controller and that are configured to implement the foregoing exhaust control method may also be software modules.

An embodiment of this invention further provides a vehicle. As shown in FIG. 1 to FIG. 14, the vehicle may include the reservoir 01, the brake assembly 02, and the hydraulic brake system provided in the foregoing embodiments.

Optionally, as shown in FIG. 2 to FIG. 14, the reservoir 01 may include the first liquid storage cavity 011, the second liquid storage cavity 012, and the third liquid storage cavity 013 that are spaced apart. The first liquid storage cavity 011 may be separately connected to the pressurizing assembly 10 (for example, the pressurizing cylinder 12) and the fifth transmission subassembly 25 in the hydraulic brake system, the second liquid storage cavity 012 may be connected to the rear cavity 322 of the master cylinder 32 in the hydraulic brake system, and the third liquid storage cavity 013 may be connected to the sixth transmission subassembly 26 in the hydraulic brake system.

By dividing the reservoir 01 into a plurality of different liquid storage cavities and connecting different components to different liquid storage cavities, fault isolation can be implemented, and reliability of the hydraulic brake system can be effectively improved.

Optionally, the vehicle may be an electric vehicle. In addition, the vehicle may be a self-driving car, a remote-driving car, an airborne car, or the like.

The exhaust control method provided in the foregoing embodiments may be totally or partially implemented by using software, hardware, firmware, or any combination thereof. When the software is used to implement the exhaust control method provided in the foregoing embodiments, the exhaust control method provided in the foregoing embodiments may be totally or partially implemented in a form of a computer program product. The computer program product includes at least one computer instruction. When the computer program instruction is loaded or executed on a computer, all or some of the procedures or functions according to the method embodiments of this invention are generated. The computer may be a general-purpose computer, a dedicated computer, a computer network, or another programmable apparatus. The computer instruction may be stored in a computer-readable storage medium or may be transmitted from a computer-readable storage medium to another computer-readable storage medium. For example, the computer instruction may be transmitted from a website, computer, server, or data center to another web site, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating at least one usable medium set. The usable medium may be a magnetic medium (for example, a floppy disk, a hard disk, or a magnetic tape), an optical medium (for example, a DVD), or a semiconductor medium. The semiconductor medium may be a solid state drive (solid state drive, SSD).

In this invention, terms such as "first" and "second" are used to distinguish same items or similar items that have basically same effect and functions. It should be understood that there is no logical or time sequence dependency between "first", "second", and "n^{th}". A quantity and an execution sequence are not limited. For example, a first cavity may be referred to as a second cavity without departing from the scope of the various described examples, and similarly, the second cavity may be referred to as the first cavity.

In this invention, a term "at least one" means at least one, and a term "a plurality of" means two or more. Terms "system" and "network" may be used interchangeably in this specification. It should be understood that "and/or" mentioned in this specification indicates that three relationships may exist. For example, A and/or B may indicate the following three cases: Only A exists, both A and B exist, and only B exists. The character "/" generally indicates an "or" relationship between associated objects.

It should be understood that all valves in the system provided in embodiments of this invention may be solenoid valves. In addition, names of valves in embodiments of this invention do not represent types of solenoid valves, but only indicate functions of the valves, and do not limit kinds and types of solenoid valves. Therefore, the claims should include other types of solenoid valves with different names and similar functions.

The foregoing descriptions are merely optional embodiments of this invention, but are not intended to limit the protection scope of this invention. Any modification or replacement readily figured out by a person skilled in the art within the technical scope disclosed in this invention shall fall within the protection scope of this invention. In fact, the protection scope of this invention is defined by the scope of the claims.

## Claims

1. A hydraulic brake system, wherein the system comprises a pressurizing assembly (10), a brake fluid transmission assembly (20), a brake control assembly (30), and a controller (40), wherein the pressurizing assembly (10) comprises a motor (11), a piston (12), and a pressurizing cylinder (13);
the motor (11) is separately connected to a first end of the piston (12) and to the controller (40), a second end of the piston (12) is located in the pressurizing cylinder (13), and the pressurizing cylinder (13) is separately connected to the brake fluid transmission assembly (20) and a reservoir (01);
the brake fluid transmission assembly (20) is further separately connected to the brake control assembly (30), the controller (40), and a brake assembly (02); and
the controller (40) is configured to control the pressurizing assembly (10) to output brake fluid to the brake fluid transmission assembly (20) and to control the brake fluid transmission assembly (20) to alternatively connect the pressurizing cylinder (13) to the brake control assembly (30) and the brake assembly (02) based on an exhaust instruction, so as to exhaust gas in the assembly connected to the pressurizing cylinder (13).

2. The system according to claim 1, wherein
the controller (40) is configured to: control the motor (11) to drive the piston (12) to move in a first direction in the pressurizing cylinder (13), so as to suck the brake fluid from the reservoir (01) into the pressurizing cylinder (13), or control the motor (11) to drive the piston (12) to move in a second direction in the pressurizing cylinder (13), so as to output the brake fluid in the pressurizing cylinder (13) to the brake fluid transmission assembly (20), wherein
the first direction is opposite to the second direction.

3. The system according to claim 2, wherein the second end of the piston (12) divides the pressurizing cylinder (13) into a first cavity (131) and a second cavity (132), and both the first cavity (131) and the second cavity (132) are connected to the reservoir (01);
the brake control assembly (30) comprises a brake pedal (31) and a master cylinder (32) connected to the brake pedal (31); and the brake fluid transmission assembly (20) comprises a first transmission subassembly (21), a second transmission subassembly (22), a third transmission subassembly (23), a fourth transmission subassembly (24), and a fifth transmission subassembly (25), wherein
the first transmission subassembly (21) is separately connected to the first cavity (131), the third transmission subassembly (23), and the fourth transmission subassembly (24), the second transmission subassembly (22) is separately connected to the second cavity (132), the third transmission subassembly (23), and the fourth transmission subassembly (24), the third transmission subassembly (23) is further separately connected to the fourth transmission subassembly (24) and the master cylinder (32), the fourth transmission subassembly (24) is further connected to the brake assembly (02), and the fifth transmission subassembly (25) is connected to the reservoir (01) and the brake assembly (02); and
the controller (40) is configured to:
control the motor (11) to drive the piston (12) to move in the first direction in the pressurizing cylinder (13), control the second transmission subassembly (22), the fourth transmission subassembly (24), and the fifth transmission subassembly (25) to be connected, and control the first transmission subassembly (21) to be disconnected; or
control the motor (11) to drive the piston (12) to move in the second direction in the pressurizing cylinder (13), control the first transmission subassembly (21) to be connected, and control the third transmission subassembly (23) or the fourth transmission subassembly (24) to be connected.

4. The system according to claim 3, wherein the controller (40) is configured to:
if the exhaust instruction is an exhaust instruction for the brake control assembly (30), control the motor (11) to drive the piston (12) to move in the second direction in the pressurizing cylinder (13), control the first transmission subassembly (21) and the third transmission subassembly (23) to be connected, and control the fourth transmission subassembly (24) to be disconnected.

5. The system according to claim 4, wherein the brake control assembly (30) further comprises a sixth transmission subassembly (26); and the master cylinder (32) comprises a front cavity (321) and a rear cavity (322), wherein the front cavity (321) is closer to the brake pedal (31) than the rear cavity (322), the front cavity (321) is connected to the reservoir (01) by using the sixth transmission subassembly (26), and the rear cavity (322) is connected to the reservoir (01);
the third transmission subassembly (23) comprises a first wheel cylinder control valve (3a) and a second wheel cylinder control valve (3b), wherein the first wheel cylinder control valve (3a) is separately connected to the front cavity (321), the first transmission subassembly (21) and the fourth transmission subassembly (24), and the second wheel cylinder control valve (3b) is separately connected to the rear cavity (322), the first transmission subassembly (21), and the fourth transmission subassembly (24); and
the controller (40) is configured to: control the motor (11) to drive the piston (12) to move in the second direction in the pressurizing cylinder (13), and perform at least one of the following operations:
controlling the first transmission subassembly (21), the first wheel cylinder control valve (3a), the second wheel cylinder control valve (3b), and the sixth transmission subassembly (26) to be connected, and controlling the fourth transmission subassembly (24) to be disconnected;
controlling the first transmission subassembly (21) and the second wheel cylinder control valve (3b) to be connected, and controlling the first wheel cylinder control valve (3a) and the fourth transmission subassembly (24) to be disconnected;
controlling the first transmission subassembly (21), the first wheel cylinder control valve (3a), and the sixth transmission subassembly (26) to be connected, and controlling the second wheel cylinder control valve (3b) and the fourth transmission subassembly (24) to be disconnected; and
controlling the first transmission subassembly (21) and the first wheel cylinder control valve (3a) to be connected, and controlling the second wheel cylinder control valve (3b), the fourth transmission subassembly (24), and the sixth transmission subassembly (26) to be disconnected.

6. The system according to claim 3, wherein the controller (40) is configured to:
if the exhaust instruction is an exhaust instruction for the brake assembly (02), control the motor (11) to drive the piston (12) to move in the second direction in the pressurizing cylinder (13), control the first transmission subassembly (21) and the fourth transmission subassembly (24) to be connected, and control the third transmission subassembly (23) and the fifth transmission subassembly (25) to be disconnected.

7. The system according to claim 6, wherein the brake assembly (02) comprises a plurality of brake wheel cylinders, the fourth transmission subassembly (24) comprises a plurality of liquid inlet valves connected to the plurality of brake wheel cylinders in a one-to-one correspondence, and the fifth transmission subassembly (25) comprises a plurality of liquid outlet valves connected to the plurality of brake wheel cylinders in a one-to-one correspondence; and
the controller (40) is configured to: control the motor (11) to drive the piston (12) to move in the second direction in the pressurizing cylinder (13), and control a liquid inlet valve connected to at least one brake wheel cylinder to be turned on and a liquid outlet valve connected to the brake wheel cylinder to be turned off.

8. The system according to claim 7, wherein the exhaust instruction is an exhaust instruction for at least one target brake wheel cylinder in the brake assembly (02); and the controller (40) is configured to:
control the motor (11) to drive the piston (12) to move in the second direction in the pressurizing cylinder (13), control at least one target liquid inlet valve in the plurality of liquid inlet valves to be turned on, and control a liquid inlet valve other than the at least one target liquid inlet valve in the plurality of liquid inlet valves to be turned off, wherein
the at least one target liquid inlet valve is a liquid inlet valve connected to the at least one target brake wheel cylinder.

9. The system according to any one of claims 3 to 8, wherein the plurality of brake wheel cylinders in the brake assembly (02) comprise: at least one first brake wheel cylinder and at least one second brake wheel cylinder, wherein
the first brake wheel cylinder is separately connected to a first liquid inlet valve in the plurality of liquid inlet valves comprised in the fourth transmission subassembly (24) and a first liquid outlet valve in the plurality of liquid outlet valves comprised in the fifth transmission subassembly (25), and the second brake wheel cylinder is separately connected to a second liquid inlet valve in the plurality of liquid inlet valves comprised in the fourth transmission subassembly (24) and a second liquid outlet valve in the plurality of liquid outlet valves comprised in the fifth transmission subassembly (25);
the second transmission subassembly (22) comprises a first liquid suction control valve and a second liquid suction control valve, wherein the first liquid suction control valve is separately connected to the second cavity (132) and the first liquid inlet valve, and the second liquid suction control valve is separately connected to the second cavity (132) and the second liquid inlet valve; and
the controller (40) is configured to: control the motor (11) to drive the piston (12) to move in the first direction in the pressurizing cylinder (13), and perform at least one of the following operations:
controlling the second liquid suction control valve, the second liquid inlet valve, and the second liquid outlet valve to be turned on, and controlling the first liquid suction control valve, the first liquid inlet valve, and the first liquid outlet valve to be turned off;
controlling the first liquid suction control valve, the first liquid inlet valve, and the first liquid outlet valve to be turned on, and controlling the second liquid suction control valve, the second liquid inlet valve, and the second liquid outlet valve to be turned off; and
controlling the first liquid suction control valve, the first liquid inlet valve, the first liquid outlet valve, the second liquid suction control valve, the second liquid inlet valve, and the second liquid outlet valve to be turned on.

10. The system according to any one of claims 3 to 9, wherein the system further comprises a pedal feel simulator; and the brake fluid transmission assembly (20) further comprises a simulator control valve, wherein the simulator control valve is separately connected to the pedal feel simulator, the front cavity (321) of the master cylinder (32), and the third transmission subassembly (23); and
the controller (40) is further configured to:
if the exhaust instruction is an exhaust instruction for the pedal feel simulator, control the motor (11) to drive the piston (12) to move in the second direction in the pressurizing cylinder (13), control the first transmission subassembly (21), the third transmission subassembly (23), and the simulator control valve to be connected, and control the fourth transmission subassembly (24) and the sixth transmission subassembly (26) to be disconnected; and
if the piston (12) moves to an upper limit of a stroke in the second direction, control the third transmission subassembly (23) to be disconnected, and control the sixth transmission subassembly (26) to be connected.

11. An exhaust control method for a hydraulic brake system, to be applied to a controller (40) in the system, wherein the system further comprises a pressurizing assembly (10), a brake fluid transmission assembly (20), and a brake control assembly (30), wherein the pressurizing assembly (10) comprises a motor (11), a piston (12), and a pressurizing cylinder (13), the motor (11) is separately connected to a first end of the piston (12) and to the controller (40), a second end of the piston (12) is located in the pressurizing cylinder (13), the pressurizing cylinder (13) is separately connected to the brake fluid transmission assembly (20) and a reservoir (01), and the brake fluid transmission assembly (20) is further separately connected to the brake control assembly (30), the controller (40), and a brake assembly (02); and the method comprises:
obtaining an exhaust instruction; and
controlling the pressurizing assembly (10) to output brake fluid to the brake fluid transmission assembly (20) and controlling the brake fluid transmission assembly (20) to alternatively connect the pressurizing cylinder (13) to the brake control assembly (30) and the brake assembly (02) based on the exhaust instruction, so as to exhaust gas in the assembly connected to the pressurizing cylinder (13).

12. The method according to claim 11, wherein before the controlling the pressurizing assembly (10) to output brake fluid to the brake fluid transmission assembly (20) based on the exhaust instruction, the method further comprises: controlling the motor (11) to drive the piston (12) to move in a first direction in the pressurizing cylinder (13) based on the exhaust instruction, so as to suck the brake fluid from the reservoir (01) into the pressurizing cylinder (13); and
the controlling the pressurizing assembly (10) to output brake fluid to the brake fluid transmission assembly (20) comprises: controlling the motor (11) to drive the piston (12) to move in a second direction in the pressurizing cylinder (13), so as to output the brake fluid in the pressurizing cylinder (13) to the brake fluid transmission assembly (20), wherein
the first direction is opposite to the second direction.

13. The method according to claim 12, wherein the second end of the piston (12) divides the pressurizing cylinder (13) into a first cavity (131) and a second cavity (132), and both the first cavity (131) and the second cavity (132) are connected to the reservoir (01); the brake control assembly (30) comprises a brake pedal (31) and a master cylinder (32) connected to the brake pedal (31); and the brake fluid transmission assembly (20) comprises a first transmission subassembly (21), a second transmission subassembly (22), a third transmission subassembly (23), a fourth transmission subassembly (24), and a fifth transmission subassembly (25), wherein the first transmission subassembly (21) is separately connected to the first cavity (131), the third transmission subassembly (23), and the fourth transmission subassembly (24), the second transmission subassembly (22) is separately connected to the second cavity (132), the third transmission subassembly (23), and the fourth transmission subassembly (24), the third transmission subassembly (23) is further separately connected to the fourth transmission subassembly (24) and the master cylinder (32), the fourth transmission subassembly (24) is further connected to the brake assembly (02), and the fifth transmission subassembly (25) is connected to the reservoir (01) and the brake assembly (02);
the controlling the motor (11) to drive the piston (12) to move in a first direction in the pressurizing cylinder (13), so as to suck the brake fluid from the reservoir (01) into the pressurizing cylinder (13) comprises: controlling the motor (11) to drive the piston (12) to move in the first direction in the pressurizing cylinder (13), controlling the second transmission subassembly (22), the fourth transmission subassembly (24), and the fifth transmission subassembly (25) to be connected, and controlling the first transmission subassembly (21) to be disconnected; and
the controlling the brake fluid transmission assembly (20) to connect the pressurizing assembly (10) to the brake control assembly (30) or the brake assembly (02) comprises:
controlling the first transmission subassembly (21) to be connected, and controlling the third transmission subassembly (23) or the fourth transmission subassembly (24) to be connected.

14. The method according to claim 13, wherein if the exhaust instruction is an exhaust instruction for the brake control assembly (30), the controlling the first transmission subassembly (21) to be connected, and controlling the third transmission subassembly (23) or the fourth transmission subassembly (24) to be connected comprises:
controlling the first transmission subassembly (21) and the third transmission subassembly (23) to be connected, and controlling the fourth transmission subassembly (24) to be disconnected.

15. A vehicle, comprising a reservoir (01), a brake assembly (02), and the hydraulic brake system according to any one of claims 1 to 10, wherein the reservoir (01) is configured to store brake fluid.

## Patentansprüche

1. Hydraulisches Bremssystem, wobei das System eine Druckbeaufschlagungsbaugruppe (10), eine Bremsfluidübertragungsbaugruppe (20), eine Bremssteuerungsbaugruppe (30) und ein Steuergerät (40) umfasst, wobei die Druckbeaufschlagungsbaugruppe (10) einen Motor (11), einen Kolben (12) und einen Druckbeaufschlagungszylinder (13) umfasst;
der Motor (11) separat mit einem ersten Ende des Kolbens (12) und mit dem Steuergerät (40) verbunden ist, sich ein zweites Ende des Kolbens (12) in dem Druckbeaufschlagungszylinder (13) befindet und der Druckbeaufschlagungszylinder (13) separat mit der Bremsfluidübertragungsbaugruppe (20) und einem Reservoir (01) verbunden ist;
die Bremsfluidübertragungsbaugruppe (20) ferner separat mit der Bremssteuerungsbaugruppe (30), dem Steuergerät (40) und einer Bremsbaugruppe (02) verbunden ist; und
das Steuergerät (40) dazu konfiguriert ist, die Druckbeaufschlagungsbaugruppe (10) dahingehend zu steuern, Bremsfluid an die Bremsfluidübertragungsbaugruppe (20) auszugeben, und die Bremsfluidübertragungsbaugruppe (20) dahingehend zu steuern, den Druckbeaufschlagungszylinder (13) alternativ mit der Bremssteuerungsbaugruppe (30) und der Bremsbaugruppe (02) basierend auf einer Ablassanweisung zu verbinden, um Gas in der mit dem Druckbeaufschlagungszylinder (13) verbundenen Baugruppe abzulassen.

2. System nach Anspruch 1, wobei
das Steuergerät (40) zu Folgendem konfiguriert ist: Steuern des Motors (11) dahingehend, den Kolben (12) so anzutreiben, dass er sich in einer ersten Richtung in dem Druckbeaufschlagungszylinder (13) bewegt, um das Bremsfluid aus dem Reservoir (01) in den Druckbeaufschlagungszylinder (13) zu saugen, oder Steuern des Motors (11) dahingehend, den Kolben (12) so anzutreiben, dass er sich in einer zweiten Richtung in dem Druckbeaufschlagungszylinder (13) bewegt, um das Bremsfluid in dem Druckbeaufschlagungszylinder (13) zu der Bremsfluidübertragungsbaugruppe (20) auszugeben, wobei die erste Richtung der zweiten Richtung entgegengesetzt ist.

3. System nach Anspruch 2, wobei das zweite Ende des Kolbens (12) den Druckbeaufschlagungszylinder (13) in einen ersten Hohlraum (131) und einen zweiten Hohlraum (132) unterteilt und sowohl der erste Hohlraum (131) als auch der zweite Hohlraum (132) mit dem Reservoir (01) verbunden sind;
die Bremssteuerbaugruppe (30) ein Bremspedal (31) und einen mit dem Bremspedal (31) verbundenen Hauptzylinder (32) umfasst; und die Bremsfluidübertragungsbaugruppe (20) eine erste Übertragungsunterbaugruppe (21), eine zweite Übertragungsunterbaugruppe (22), eine dritte Übertragungsunterbaugruppe (23), eine vierte Übertragungsunterbaugruppe (24) und eine fünfte Übertragungsunterbaugruppe (25) umfasst, wobei
die erste Übertragungsunterbaugruppe (21) separat mit dem ersten Hohlraum (131), der dritten Übertragungsunterbaugruppe (23) und der vierten Übertragungsunterbaugruppe (24) verbunden ist, die zweite Übertragungsunterbaugruppe (22) separat mit dem zweiten Hohlraum (132), der dritten Übertragungsunterbaugruppe (23) und der vierten Übertragungsunterbaugruppe (24) verbunden ist, die dritte Übertragungsunterbaugruppe (23) ferner separat mit der vierten Übertragungsunterbaugruppe (24) und dem Hauptzylinder (32) verbunden ist, die vierte Übertragungsunterbaugruppe (24) ferner mit der Bremsbaugruppe (02) verbunden ist und die fünfte Übertragungsunterbaugruppe (25) mit dem Reservoir (01) und der Bremsbaugruppe (02) verbunden ist; und
das Steuergerät (40) zu Folgendem konfiguriert ist:
Steuern des Motors (11) dahingehend, den Kolben (12) so anzutreiben, dass er sich in der ersten Richtung in dem Druckbeaufschlagungszylinder (13) bewegt, Steuern der zweiten Übertragungsunterbaugruppe (22), der vierten Übertragungsunterbaugruppe (24) und der fünften Übertragungsunterbaugruppe (25) dahingehend, verbunden zu werden, und Steuern der ersten Übertragungsunterbaugruppe (21) dahingehend, getrennt zu werden; oder
Steuern des Motors (11) dahingehend, den Kolben (12) so anzutreiben, dass er sich in der zweiten Richtung in dem Druckbeaufschlagungszylinder (13) bewegt, Steuern der ersten Übertragungsunterbaugruppe (21) dahingehend, verbunden zu werden, und Steuern der dritten Übertragungsunterbaugruppe (23) oder der vierten Übertragungsunterbaugruppe (24) dahingehend, verbunden zu werden.

4. System nach Anspruch 3, wobei das Steuergerät (40) zu Folgendem konfiguriert ist:
wenn die Ablassanweisung eine Ablassanweisung für die Bremssteuerungsbaugruppe (30) ist, Steuern des Motors (11) dahingehend, den Kolben (12) so anzutreiben, dass er sich in der zweiten Richtung in dem Druckbeaufschlagungszylinder (13) bewegt, Steuern der ersten Übertragungsunterbaugruppe (21) und der dritten Übertragungsunterbaugruppe (23) dahingehend, verbunden zu werden, und Steuern der vierten Übertragungsunterbaugruppe (24) dahingehend, getrennt zu werden.

5. System nach Anspruch 4, wobei die Bremssteuerungsbaugruppe (30) ferner eine sechste Übertragungsunterbaugruppe (26) umfasst; und der Hauptzylinder (32) einen vorderen Hohlraum (321) und einen hinteren Hohlraum (322) umfasst, wobei der vordere Hohlraum (321) näher an dem Bremspedal (31) liegt als der hintere Hohlraum (322), der vordere Hohlraum (321) unter Verwendung der sechsten Übertragungsunterbaugruppe (26) mit dem Reservoir (01) verbunden ist und der hintere Hohlraum (322) mit dem Reservoir (01) verbunden ist;
die dritte Übertragungsunterbaugruppe (23) ein erstes Radzylindersteuerungsventil (3a) und ein zweites Radzylindersteuerungsventil (3b) umfasst, wobei das erste Radzylindersteuerungsventil (3a) separat mit dem vorderen Hohlraum (321), der ersten Übertragungsunterbaugruppe (21) und der vierten Übertragungsunterbaugruppe (24) verbunden ist und das zweite Radzylindersteuerungsventil (3b) separat mit dem hinteren Hohlraum (322), der ersten Übertragungsunterbaugruppe (21) und der vierten Übertragungsunterbaugruppe (24) verbunden ist; und
das Steuergerät (40) zu Folgendem konfiguriert ist: Steuern des Motors (11) dahingehend, den Kolben (12) so anzutreiben, dass er sich in der zweiten Richtung in dem Druckbeaufschlagungszylinder (13) bewegt, und Durchführen mindestens eines der folgenden Vorgänge:
Steuern der ersten Übertragungsunterbaugruppe (21), des ersten Radzylindersteuerungsventils (3a), des zweiten Radzylindersteuerungsventils (3b) und der sechsten Übertragungsunterbaugruppe (26) dahingehend, verbunden zu werden, und Steuern der vierten Übertragungsunterbaugruppe (24) dahingehend, getrennt zu werden;
Steuern der ersten Übertragungsunterbaugruppe (21) und des zweiten Radzylindersteuerungsventils (3b) dahingehend, verbunden zu werden, und Steuern des ersten Radzylindersteuerungsventils (3a) und der vierten Übertragungsunterbaugruppe (24) dahingehend, getrennt zu werden;
Steuern der ersten Übertragungsunterbaugruppe (21), des ersten Radzylindersteuerungsventils (3a) und der sechsten Übertragungsunterbaugruppe (26) dahingehend, verbunden zu werden, und Steuern des zweiten Radzylindersteuerungsventils (3b) und der vierten Übertragungsunterbaugruppe (24) dahingehend, getrennt zu werden; und
Steuern der ersten Übertragungsunterbaugruppe (21) und des ersten Radzylindersteuerungsventils (3a) dahingehend, verbunden zu werden, und Steuern des zweiten Radzylindersteuerungsventils (3b), der vierten Übertragungsunterbaugruppe (24) und der sechsten Übertragungsunterbaugruppe (26) dahingehend, getrennt zu werden.

6. System nach Anspruch 3, wobei das Steuergerät (40) zu Folgendem konfiguriert ist:
wenn die Ablassanweisung eine Ablassanweisung für die Bremsbaugruppe (02) ist, Steuern des Motors (11) dahingehend, den Kolben (12) so anzutreiben, dass er sich in der zweiten Richtung in dem Druckbeaufschlagungszylinder (13) bewegt, Steuern der ersten Übertragungsunterbaugruppe (21) und der vierten Übertragungsunterbaugruppe (24) dahingehend, verbunden zu werden, und Steuern der dritten Übertragungsunterbaugruppe (23) und der fünften Übertragungsunterbaugruppe (25) dahingehend, getrennt zu werden.

7. System nach Anspruch 6, wobei die Bremsbaugruppe (02) eine Vielzahl von Bremsradzylindern umfasst, die vierte Übertragungsunterbaugruppe (24) eine Vielzahl von Flüssigkeitseinlassventilen umfasst, die mit der Vielzahl von Bremsradzylindern in einer Eins-zu-Eins-Entsprechung verbunden sind, und die fünfte Übertragungsunterbaugruppe (25) eine Vielzahl von Flüssigkeitsauslassventilen umfasst, die mit der Vielzahl von Bremsradzylindern in einer Eins-zu-Eins-Entsprechung verbunden sind; und
das Steuergerät (40) zu Folgendem konfiguriert ist: Steuern des Motors (11) dahingehend, den Kolben (12) so anzutreiben, dass er sich in der zweiten Richtung in dem Druckbeaufschlagungszylinder (13) bewegt, und Steuern eines Flüssigkeitseinlassventils, das mit mindestens einem Bremsradzylinder verbunden ist, dahingehend, eingeschaltet zu werden, und eines Flüssigkeitsauslassventils, das mit dem Bremsradzylinder verbunden ist, dahingehend, ausgeschaltet zu werden.

8. System nach Anspruch 7, wobei die Ablassanweisung eine Ablassanweisung für mindestens einen Zielbremsradzylinder in der Bremsbaugruppe (02) ist; und das Steuergerät (40) zu Folgendem konfiguriert ist:
Steuern des Motors (11) dahingehend, den Kolben (12) so anzutreiben, dass er sich in der zweiten Richtung in dem Druckbeaufschlagungszylinder (13) bewegt, Steuern mindestens eines Zielflüssigkeitseinlassventils in der Vielzahl von Flüssigkeitseinlassventilen dahingehend, eingeschaltet zu werden, und Steuern eines anderen Flüssigkeitseinlassventils als das mindestens eine Zielflüssigkeitseinlassventil in der Vielzahl von Flüssigkeitseinlassventilen dahingehend, ausgeschaltet zu werden, wobei
das mindestens eine Zielflüssigkeitseinlassventil ein Flüssigkeitseinlassventil ist, das mit dem mindestens einen Zielbremsradzylinder verbunden ist.

9. System nach einem der Ansprüche 3 bis 8, wobei die Vielzahl von Bremsradzylindern in der Bremsbaugruppe (02) Folgendes umfasst: mindestens einen ersten Bremsradzylinder und mindestens einen zweiten Bremsradzylinder, wobei
der erste Bremsradzylinder separat mit einem ersten Flüssigkeitseinlassventil in der Vielzahl von Flüssigkeitseinlassventilen, die in der vierten Übertragungsunterbaugruppe (24) umfasst sind, und einem ersten Flüssigkeitsauslassventil in der Vielzahl von Flüssigkeitsauslassventilen, die in der fünften Übertragungsunterbaugruppe (25) umfasst sind, verbunden ist und der zweite Bremsradzylinder separat mit einem zweiten Flüssigkeitseinlassventil in der Vielzahl von Flüssigkeitseinlassventilen, die in der vierten Übertragungsunterbaugruppe (24) umfasst sind, und einem zweiten Flüssigkeitsauslassventil in der Vielzahl von Flüssigkeitsauslassventilen, die in der fünften Übertragungsunterbaugruppe (25) umfasst sind, verbunden ist;
die zweite Übertragungsunterbaugruppe (22) ein erstes Flüssigkeitsansaugsteuerungsventil und ein zweites Flüssigkeitsansaugsteuerungsventil umfasst, wobei das erste Flüssigkeitsansaugsteuerungsventil separat mit dem zweiten Hohlraum (132) und dem ersten Flüssigkeitseinlassventil verbunden ist und das zweite Flüssigkeitsansaugsteuerungsventil separat mit dem zweiten Hohlraum (132) und dem zweiten Flüssigkeitseinlassventil verbunden ist; und
das Steuergerät (40) zu Folgendem konfiguriert ist: Steuern des Motors (11) dahingehend, den Kolben (12) so anzutreiben, dass er sich in der ersten Richtung in dem Druckbeaufschlagungszylinder (13) bewegt, und Durchführen mindestens eines der folgenden Vorgänge:
Steuern des zweiten Flüssigkeitsansaugsteuerungsventils, des zweiten Flüssigkeitseinlassventils und des zweiten Flüssigkeitsauslassventils dahingehend, eingeschaltet zu werden, und Steuern des ersten Flüssigkeitsansaugsteuerungsventils, des ersten Flüssigkeitseinlassventils und des ersten Flüssigkeitsauslassventils dahingehend, ausgeschaltet zu werden;
Steuern des ersten Flüssigkeitsansaugsteuerungsventils, des ersten Flüssigkeitseinlassventils und des ersten Flüssigkeitsauslassventils dahingehend, eingeschaltet zu werden, und Steuern des zweiten Flüssigkeitsansaugsteuerungsventils, des zweiten Flüssigkeitseinlassventils und des zweiten Flüssigkeitsauslassventils dahingehend, ausgeschaltet zu werden; und
Steuern des ersten Flüssigkeitsansaugsteuerungsventils, des ersten Flüssigkeitseinlassventils, des ersten Flüssigkeitsauslassventils, des zweiten Flüssigkeitsansaugsteuerungsventils, des zweiten Flüssigkeitseinlassventils und des zweiten Flüssigkeitsauslassventils dahingehend, eingeschaltet zu werden.

10. System nach einem der Ansprüche 3 bis 9, wobei das System ferner einen Pedalgefühlsimulator umfasst; und die Bremsfluidübertragungsbaugruppe (20) ferner ein Simulatorsteuerungsventil umfasst, wobei das Simulatorsteuerungsventil separat mit dem Pedalgefühlsimulator, dem vorderen Hohlraum (321) des Hauptzylinders (32) und der dritten Übertragungsunterbaugruppe (23) verbunden ist; und
das Steuergerät (40) ferner zu Folgendem konfiguriert ist:
wenn die Ablassanweisung eine Ablassanweisung für den Pedalgefühlsimulator ist, Steuern des Motors (11) dahingehend, den Kolben (12) so anzutreiben, dass er sich in der zweiten Richtung in dem Druckbeaufschlagungszylinder (13) bewegt, Steuern der ersten Übertragungsunterbaugruppe (21), der dritten Übertragungsunterbaugruppe (23) und des Simulatorsteuerungsventils dahingehend, verbunden zu werden, und Steuern der vierten Übertragungsunterbaugruppe (24) und der sechsten Übertragungsunterbaugruppe (26) dahingehend, getrennt zu werden; und,
wenn sich der Kolben (12) bis zu einer oberen Grenze eines Hubs in der zweiten Richtung bewegt, Steuern der dritten Übertragungsunterbaugruppe (23) dahingehend, getrennt zu werden, und Steuern der sechsten Übertragungsunterbaugruppe (26) dahingehend, verbunden zu werden.

11. Ablasssteuerungsverfahren für ein hydraulisches Bremssystem, das auf ein Steuergerät (40) in dem System anzuwenden ist, wobei das System ferner eine Druckbeaufschlagungsbaugruppe (10), eine Bremsfluidübertragungsbaugruppe (20) und eine Bremssteuerungsbaugruppe (30) umfasst, wobei die Druckbeaufschlagungsbaugruppe (10) einen Motor (11), einen Kolben (12) und einen Druckbeaufschlagungszylinder (13) umfasst, der Motor (11) separat mit einem ersten Ende des Kolbens (12) und mit dem Steuergerät (40) verbunden ist, sich ein zweites Ende des Kolbens (12) in dem Druckbeaufschlagungszylinder (13) befindet, der Druckbeaufschlagungszylinder (13) separat mit der Bremsfluidübertragungsbaugruppe (20) und einem Reservoir (01) verbunden ist und die Bremsfluidübertragungsbaugruppe (20) ferner separat mit der Bremssteuerungsbaugruppe (30), dem Steuergerät (40) und einer Bremsbaugruppe (02) verbunden ist; und das Verfahren Folgendes umfasst:
Erlangen einer Ablassanweisung; und
Steuern der Druckbeaufschlagungsbaugruppe (10) dahingehend, Bremsfluid an die Bremsfluidübertragungsbaugruppe (20) auszugeben, und Steuern der Bremsfluidübertragungsbaugruppe (20) dahingehend, den Druckbeaufschlagungszylinder (13) alternativ mit der Bremssteuerungsbaugruppe (30) und der Bremsbaugruppe (02) basierend auf der Ablassanweisung zu verbinden, um Gas in der mit dem Druckbeaufschlagungszylinder (13) verbundenen Baugruppe abzulassen.

12. Verfahren nach Anspruch 11, wobei das Verfahren vor dem Steuern der Druckbeaufschlagungsbaugruppe (10) dahingehend, Bremsfluid an die Bremsfluidübertragungsbaugruppe (20) basierend auf der Ablassanweisung ferner Folgendes umfasst: Steuern des Motors (11) dahingehend, den Kolben (12) so anzutreiben, dass er sich basierend auf der Ablassanweisung in einer ersten Richtung in dem Druckbeaufschlagungszylinder (13) bewegt, um das Bremsfluid aus dem Reservoir (01) in den Druckbeaufschlagungszylinder (13) zu saugen; und
das Steuern der Druckbeaufschlagungsbaugruppe (10) dahingehend, Bremsfluid an die Bremsfluidübertragungsbaugruppe (20) auszugeben, Folgendes umfasst: Steuern des Motors (11) dahingehend, den Kolben (12) so anzutreiben, dass er sich in einer zweiten Richtung in dem Druckbeaufschlagungszylinder (13) bewegt, um das Bremsfluid in dem Druckbeaufschlagungszylinder (13) an die Bremsfluidübertragungsbaugruppe (20) auszugeben, wobei
die erste Richtung der zweiten Richtung entgegengesetzt ist.

13. Verfahren nach Anspruch 12, wobei das zweite Ende des Kolbens (12) den Druckbeaufschlagungszylinder (13) in einen ersten Hohlraum (131) und einen zweiten Hohlraum (132) unterteilt und sowohl der erste Hohlraum (131) als auch der zweite Hohlraum (132) mit dem Reservoir (01) verbunden sind; die Bremssteuerungsbaugruppe (30) ein Bremspedal (31) und einen mit dem Bremspedal (31) verbundenen Hauptzylinder (32) umfasst; und die Bremsfluidübertragungsbaugruppe (20) eine erste Übertragungsunterbaugruppe (21), eine zweite Übertragungsunterbaugruppe (22), eine dritte Übertragungsunterbaugruppe (23), eine vierte Übertragungsunterbaugruppe (24) und eine fünfte Übertragungsunterbaugruppe (25) umfasst, wobei die erste Übertragungsunterbaugruppe (21) separat mit dem ersten Hohlraum (131), der dritten Übertragungsunterbaugruppe (23) und der vierten Übertragungsunterbaugruppe (24) verbunden ist, die zweite Übertragungsunterbaugruppe (22) separat mit dem zweiten Hohlraum (132), der dritten Übertragungsunterbaugruppe (23) und der vierten Übertragungsunterbaugruppe (24) verbunden ist, die dritte Übertragungsunterbaugruppe (23) ferner separat mit der vierten Übertragungsunterbaugruppe (24) und dem Hauptzylinder (32) verbunden ist, die vierte Übertragungsunterbaugruppe (24) ferner mit der Bremsbaugruppe (02) verbunden ist und die fünfte Übertragungsunterbaugruppe (25) mit dem Reservoir (01) und der Bremsbaugruppe (02) verbunden ist;
das Steuern des Motors (11) dahingehend, den Kolben (12) so anzutreiben, dass er sich in einer ersten Richtung in dem Druckbeaufschlagungszylinder (13) bewegt, um das Bremsfluid aus dem Reservoir (01) in den Druckbeaufschlagungszylinder (13) zu saugen, Folgendes umfasst: Steuern des Motors (11) dahingehend, den Kolben (12) so anzutreiben, dass er sich in der ersten Richtung in dem Druckbeaufschlagungszylinder (13) bewegt, Steuern der zweiten Übertragungsunterbaugruppe (22), der vierten Übertragungsunterbaugruppe (24) und der fünften Übertragungsunterbaugruppe (25) dahingehend, verbunden zu werden, und Steuern der ersten Übertragungsunterbaugruppe (21) dahingehend, getrennt zu werden; und
das Steuern der Bremsfluidübertragungsbaugruppe (20) dahingehend, die Druckbeaufschlagungsbaugruppe (10) mit der Bremssteuerungsbaugruppe (30) oder der Bremsbaugruppe (02) zu verbinden, Folgendes umfasst:
Steuern der ersten Übertragungsunterbaugruppe (21) dahingehend, verbunden zu werden, und Steuern der dritten Übertragungsunterbaugruppe (23) oder der vierten Übertragungsunterbaugruppe (24) dahingehend, verbunden zu werden.

14. Verfahren nach Anspruch 13, wobei, wenn die Ablassanweisung eine Ablassanweisung für die Bremssteuerungsbaugruppe (30) ist, das Steuern der ersten Übertragungsunterbaugruppe (21) dahingehend, verbunden zu werden, und das Steuern der dritten Übertragungsunterbaugruppe (23) und der vierten Übertragungsunterbaugruppe (24) dahingehend, verbunden zu werden, Folgendes umfassen:
Steuern der ersten Übertragungsunterbaugruppe (21) und der dritten Übertragungsunterbaugruppe (23) dahingehend, verbunden zu werden, und Steuern der vierten Übertragungsunterbaugruppe (24) dahingehend, getrennt zu werden.

15. Fahrzeug, umfassend ein Reservoir (01), eine Bremsbaugruppe (02) und das hydraulische Bremssystem nach einem der Ansprüche 1 bis 10, wobei das Reservoir (01) dazu konfiguriert ist, Bremsfluid zu speichern.

## Revendications

1. Système de frein hydraulique, dans lequel le système comprend un ensemble de pressurisation (10), un ensemble de transmission de liquide de frein (20), un ensemble de commande de frein (30) et un dispositif de commande (40), dans lequel l'ensemble de pressurisation (10) comprend un moteur (11), un piston (12) et un cylindre de pressurisation (13) ;
le moteur (11) est connecté séparément à une première extrémité du piston (12) et au dispositif de commande (40), une seconde extrémité du piston (12) est située dans le cylindre de pressurisation (13), et le cylindre de pressurisation (13) est connecté séparément à l'ensemble de transmission de liquide de frein (20) et à un réservoir (01) ;
l'ensemble de transmission de liquide de frein (20) est également connecté séparément à l'ensemble de commande de frein (30), au dispositif de commande (40) et à un ensemble de frein (02) ; et
le dispositif de commande (40) est configuré pour commander l'ensemble de pressurisation (10) pour délivrer du liquide de frein à l'ensemble de transmission de liquide de frein (20) et pour commander l'ensemble de transmission de liquide de frein (20) pour connecter alternativement le cylindre de pressurisation (13) à l'ensemble de commande de frein (30) et à l'ensemble de frein (02) sur la base d'une instruction d'échappement, de manière à évacuer le gaz dans l'ensemble connecté au cylindre de pressurisation (13).

2. Système selon la revendication 1, dans lequel
le dispositif de commande (40) est configuré pour : commander le moteur (11) pour entraîner le piston (12) à se déplacer dans une première direction dans le cylindre de pressurisation (13), de manière à aspirer le liquide de frein du réservoir (01) dans le cylindre de pressurisation (13), ou commander le moteur (11) pour entraîner le piston (12) à se déplacer dans une seconde direction dans le cylindre de pressurisation (13), de manière à délivrer le liquide de frein dans le cylindre de pressurisation (13) à l'ensemble de transmission de liquide de frein (20), dans lequel la première direction est opposée à la seconde direction.

3. Système selon la revendication 2, dans lequel la seconde extrémité du piston (12) divise le cylindre de pressurisation (13) en une première cavité (131) et une seconde cavité (132), et la première cavité (131) et la seconde cavité (132) sont toutes deux connectées au réservoir (01) ;
l'ensemble de commande de frein (30) comprend une pédale de frein (31) et un maître-cylindre (32) connecté à la pédale de frein (31) ; l'ensemble de transmission de liquide de frein (20) comprend un premier sous-ensemble de transmission (21), un deuxième sous-ensemble de transmission (22), un troisième sous-ensemble de transmission (23), un quatrième sous-ensemble de transmission (24) et un cinquième sous-ensemble de transmission (25), dans lequel le premier sous-ensemble de transmission (21) est connecté séparément à la première cavité (131), au troisième sous-ensemble de transmission (23) et au quatrième sous-ensemble de transmission (24), le deuxième sous-ensemble de transmission (22) est connecté séparément à la seconde cavité (132), au troisième sous-ensemble de transmission (23) et au quatrième sous-ensemble de transmission (24), le troisième sous-ensemble de transmission (23) est également connecté séparément au quatrième sous-ensemble de transmission (24) et au maître-cylindre (32), le quatrième sous-ensemble de transmission (24) est également connecté à l'ensemble de frein (02), et le cinquième sous-ensemble de transmission (25) est connecté au réservoir (01) et à l'ensemble de frein (02) ; et le dispositif de commande (40) est configuré pour :
commander le moteur (11) pour entraîner le piston (12) à se déplacer dans la première direction dans le cylindre de pressurisation (13), commander la connexion du deuxième sous-ensemble de transmission (22), du quatrième sous-ensemble de transmission (24) et du cinquième sous-ensemble de transmission (25), et commander la déconnexion du premier sous-ensemble de transmission (21) ; ou
commander le moteur (11) pour entraîner le piston (12) à se déplacer dans la seconde direction dans le cylindre de pressurisation (13), commander la connexion du premier sous-ensemble de transmission (21), et commander la connexion du troisième sous-ensemble de transmission (23) ou du quatrième sous-ensemble de transmission (24).

4. Système selon la revendication 3, dans lequel le dispositif de commande (40) est configuré pour :
si l'instruction d'échappement est une instruction d'échappement pour l'ensemble de commande de frein (30), commander le moteur (11) pour entraîner le piston (12) à se déplacer dans la seconde direction dans le cylindre de pressurisation (13), commander la connexion du premier sous-ensemble de transmission (21) et du troisième sous-ensemble de transmission (23), et commander la déconnexion du quatrième sous-ensemble de transmission (24).

5. Système selon la revendication 4, dans lequel l'ensemble de commande de frein (30) comprend également un sixième sous-ensemble de transmission (26) ; et le maître-cylindre (32) comprend une cavité avant (321) et une cavité arrière (322), dans lequel la cavité avant (321) est plus proche de la pédale de frein (31) que la cavité arrière (322), la cavité avant (321) est connectée au réservoir (01) à l'aide du sixième sous-ensemble de transmission (26), et la cavité arrière (322) est connectée au réservoir (01) ; le troisième sous-ensemble de transmission (23) comprend une première vanne de commande de cylindre de roue (3a) et une seconde vanne de commande de cylindre de roue (3b), dans lequel la première vanne de commande de cylindre de roue (3a) est connectée séparément à la cavité avant (321), au premier sous-ensemble de transmission (21) et au quatrième sous-ensemble de transmission (24), et la seconde vanne de commande de cylindre de roue (3b) est connectée séparément à la cavité arrière (322), au premier sous-ensemble de transmission (21) et au quatrième sous-ensemble de transmission (24) ; et
le dispositif de commande (40) est configuré pour : commander le moteur (11) pour entraîner le piston (12) à se déplacer dans la seconde direction dans le cylindre de pressurisation (13), et réaliser au moins l'une des opérations suivantes :
la commande de la connexion du premier sous-ensemble de transmission (21), de la première vanne de commande de cylindre de roue (3a), de la seconde vanne de commande de cylindre de roue (3b) et du sixième sous-ensemble de transmission (26), et la commande de la déconnexion du quatrième sous-ensemble de transmission (24) ;
la commande de la connexion du premier sous-ensemble de transmission (21) et de la seconde vanne de commande de cylindre de roue (3b), et la commande de la déconnexion de la première vanne de commande de cylindre de roue (3a) et du quatrième sous-ensemble de transmission (24) ;
la commande de la connexion du premier sous-ensemble de transmission (21), de la première vanne de commande de cylindre de roue (3a) et du sixième sous-ensemble de transmission (26), et la commande de la déconnexion de la seconde vanne de commande de cylindre de roue (3b) et du quatrième sous-ensemble de transmission (24) ; et
la commande de la connexion du premier sous-ensemble de transmission (21) et de la première vanne de commande de cylindre de roue (3a), et la commande de la déconnexion de la seconde vanne de commande de cylindre de roue (3b), du quatrième sous-ensemble de transmission (24) et du sixième sous-ensemble de transmission (26).

6. Système selon la revendication 3, dans lequel le dispositif de commande (40) est configuré pour :
si l'instruction d'échappement est une instruction d'échappement pour l'ensemble de frein (02), commander le moteur (11) pour entraîner le piston (12) à se déplacer dans la seconde direction dans le cylindre de pressurisation (13), commander la connexion du premier sous-ensemble de transmission (21) et du quatrième sous-ensemble de transmission (24), et commander la déconnexion du troisième sous-ensemble de transmission (23) et du cinquième sous-ensemble de transmission (25).

7. Système selon la revendication 6, dans lequel l'ensemble de frein (02) comprend une pluralité de cylindres de roue de frein, le quatrième sous-ensemble de transmission (24) comprend une pluralité de vannes d'entrée de liquide connectées à la pluralité de cylindres de roue de frein selon une correspondance biunivoque, et le cinquième sous-ensemble de transmission (25) comprend une pluralité de vannes de sortie de liquide connectées à la pluralité de cylindres de roue de frein selon une correspondance biunivoque ; et
le dispositif de commande (40) est configuré pour : commander le moteur (11) pour entraîner le piston (12) à se déplacer dans la seconde direction dans le cylindre de pressurisation (13), et commander l'ouverture d'une vanne d'entrée de liquide connectée à au moins un cylindre de roue de frein et la fermeture d'une vanne de sortie de liquide connectée au cylindre de roue de frein.

8. Système selon la revendication 7, dans lequel l'instruction d'échappement est une instruction d'échappement pour au moins un cylindre de roue de frein cible dans l'ensemble de frein (02) ; et le dispositif de commande (40) est configuré pour :
commander le moteur (11) pour entraîner le piston (12) à se déplacer dans la seconde direction dans le cylindre de pressurisation (13), commander l'ouverture d'au moins une vanne d'entrée de liquide cible dans la pluralité de vannes d'entrée de liquide, et commander la fermeture d'une vanne d'entrée de liquide autre que l'au moins une vanne d'entrée de liquide cible dans la pluralité de vannes d'entrée de liquide, dans lequel
l'au moins une vanne d'entrée de liquide cible est une vanne d'entrée de liquide connectée à l'au moins un cylindre de roue de frein cible.

9. Système selon l'une quelconque des revendications 3 à 8, dans lequel la pluralité de cylindres de roue de frein dans l'ensemble de frein (02) comprend : au moins un premier cylindre de roue de frein et au moins un second cylindre de roue de frein, dans lequel le premier cylindre de roue de frein est connecté séparément à une première vanne d'entrée de liquide dans la pluralité de vannes d'entrée de liquide comprises dans le quatrième sous-ensemble de transmission (24) et à une première vanne de sortie de liquide dans la pluralité de vannes de sortie de liquide comprises dans le cinquième sous-ensemble de transmission (25), et le second cylindre de roue de frein est connecté séparément à une seconde vanne d'entrée de liquide dans la pluralité de vannes d'entrée de liquide comprises dans le quatrième sous-ensemble de transmission (24) et à une seconde vanne de sortie de liquide dans la pluralité de vannes de sortie de liquide comprises dans le cinquième sous-ensemble de transmission (25) ;
le deuxième sous-ensemble de transmission (22) comprend une première vanne de commande d'aspiration de liquide et une seconde vanne de commande d'aspiration de liquide, dans lequel la première vanne de commande d'aspiration de liquide est connectée séparément à la seconde cavité (132) et à la première vanne d'entrée de liquide, et la seconde vanne de commande d'aspiration de liquide est connectée séparément à la seconde cavité (132) et à la seconde vanne d'entrée de liquide ; et
le dispositif de commande (40) est configuré pour : commander le moteur (11) pour entraîner le piston (12) à se déplacer dans la première direction dans le cylindre de pressurisation (13), et réaliser au moins l'une des opérations suivantes :
la commande de l'ouverture de la seconde vanne de commande d'aspiration de liquide, de la seconde vanne d'entrée de liquide et de la seconde vanne de sortie de liquide, et la commande de la fermeture de la première vanne de commande d'aspiration de liquide, de la première vanne d'entrée de liquide et de la première vanne de sortie de liquide ;
la commande de l'ouverture de la première vanne de commande d'aspiration de liquide, de la première vanne d'entrée de liquide et de la première vanne de sortie de liquide, et la commande de la fermeture de la seconde vanne de commande d'aspiration de liquide, de la seconde vanne d'entrée de liquide et de la seconde vanne de sortie de liquide ; et
la commande de l'ouverture de la première vanne de commande d'aspiration de liquide, de la première vanne d'entrée de liquide, de la première vanne de sortie de liquide, de la seconde vanne de commande d'aspiration de liquide, de la seconde vanne d'entrée de liquide et de la seconde vanne de sortie de liquide.

10. Système selon l'une quelconque des revendications 3 à 9, dans lequel le système comprend également un simulateur de sensation de pédale ; et l'ensemble de transmission de liquide de frein (20) comprend également une vanne de commande de simulateur, dans lequel la vanne de commande de simulateur est connectée séparément au simulateur de sensation de pédale, à la cavité avant (321) du maître-cylindre (32) et au troisième sous-ensemble de transmission (23) ; et
le dispositif de commande (40) est également configuré pour :
si l'instruction d'échappement est une instruction d'échappement pour le simulateur de sensation de pédale, commander le moteur (11) pour entraîner le piston (12) à se déplacer dans la seconde direction dans le cylindre de pressurisation (13), commander la connexion du premier sous-ensemble de transmission (21), du troisième sous-ensemble de transmission (23) et de la vanne de commande de simulateur, et commander la déconnexion du quatrième sous-ensemble de transmission (24) et du sixième sous-ensemble de transmission (26) ; et
si le piston (12) se déplace jusqu'à une limite supérieure d'une course dans la seconde direction, commander la déconnexion du troisième sous-ensemble de transmission (23), et commander la connexion du sixième sous-ensemble de transmission (26).

11. Procédé de commande d'échappement pour un système de frein hydraulique, à appliquer à un dispositif de commande (40) dans le système, dans lequel le système comprend également un ensemble de pressurisation (10), un ensemble de transmission de liquide de frein (20), et un ensemble de commande de frein (30), dans lequel l'ensemble de pressurisation (10) comprend un moteur (11), un piston (12), et un cylindre de pressurisation (13), le moteur (11) est connecté séparément à une première extrémité du piston (12) et au dispositif de commande (40), une seconde extrémité du piston (12) est située dans le cylindre de pressurisation (13), le cylindre de pressurisation (13) est connecté séparément à l'ensemble de transmission de liquide de frein (20) et à un réservoir (01), et l'ensemble de transmission de liquide de frein (20) est également connecté séparément à l'ensemble de commande de frein (30), au dispositif de commande (40) et à un ensemble de frein (02) ; et le procédé comprend :
l'obtention d'une instruction d'échappement ; et
la commande de l'ensemble de pressurisation (10) pour délivrer du liquide de frein à l'ensemble de transmission de liquide de frein (20) et la commande de l'ensemble de transmission de liquide de frein (20) pour connecter alternativement le cylindre de pressurisation (13) à l'ensemble de commande de frein (30) et à l'ensemble de frein (02) sur la base de l'instruction d'échappement, de manière à évacuer le gaz dans l'ensemble connecté au cylindre de pressurisation (13).

12. Procédé selon la revendication 11, dans lequel, avant la commande de l'ensemble de pressurisation (10) pour délivrer du liquide de frein à l'ensemble de transmission de liquide de frein (20) sur la base de l'instruction d'échappement, le procédé comprend également : la commande du moteur (11) pour entraîner le piston (12) à se déplacer dans une première direction du cylindre de pressurisation (13) sur la base de l'instruction d'échappement, de manière à aspirer le liquide de frein du réservoir (01) dans le cylindre de pressurisation (13) ; et
la commande de l'ensemble de pressurisation (10) pour délivrer du liquide de frein à l'ensemble de transmission de liquide de frein (20) comprend : la commande du moteur (11) pour entraîner le piston (12) à se déplacer dans une seconde direction dans le cylindre de pressurisation (13), de manière à délivrer le liquide de frein dans le cylindre de pressurisation (13) à l'ensemble de transmission de liquide de frein (20), dans lequel
la première direction est opposée à la seconde direction.

13. Procédé selon la revendication 12, dans lequel la seconde extrémité du piston (12) divise le cylindre de pressurisation (13) en une première cavité (131) et une seconde cavité (132), et la première cavité (131) et la seconde cavité (132) sont toutes deux connectées au réservoir (01) ; l'ensemble de commande de frein (30) comprend une pédale de frein (31) et un maître-cylindre (32) connecté à la pédale de frein (31) ; et l'ensemble de transmission de liquide de frein (20) comprend un premier sous-ensemble de transmission (21), un deuxième sous-ensemble de transmission (22), un troisième sous-ensemble de transmission (23), un quatrième sous-ensemble de transmission (24) et un cinquième sous-ensemble de transmission (25), dans lequel le premier sous-ensemble de transmission (21) est connecté séparément à la première cavité (131), au troisième sous-ensemble de transmission (23) et au quatrième sous-ensemble de transmission (24), le deuxième sous-ensemble de transmission (22) est connecté séparément à la seconde cavité (132), au troisième sous-ensemble de transmission (23) et au quatrième sous-ensemble de transmission (24), le troisième sous-ensemble de transmission (23) est également connecté séparément au quatrième sous-ensemble de transmission (24) et au maître-cylindre (32), le quatrième sous-ensemble de transmission (24) est également connecté à l'ensemble de frein (02), et le cinquième sous-ensemble de transmission (25) est connecté au réservoir (01) et à l'ensemble de frein (02) ;
la commande du moteur (11) pour entraîner le piston (12) à se déplacer dans une première direction dans le cylindre de pressurisation (13), de manière à aspirer le liquide de frein du réservoir (01) dans le cylindre de pressurisation (13) comprend : la commande du moteur (11) pour entraîner le piston (12) à se déplacer dans la première direction dans le cylindre de pressurisation (13), la commande de la connexion du deuxième sous-ensemble de transmission (22), du quatrième sous-ensemble de transmission (24) et du cinquième sous-ensemble de transmission (25), et la commande de la déconnexion du premier sous-ensemble de transmission (21) ; et
la commande de l'ensemble de transmission de liquide de frein (20) pour connecter l'ensemble de pressurisation (10) à l'ensemble de commande de frein (30) ou à l'ensemble de frein (02) comprend :
la commande de la connexion du premier sous-ensemble de transmission (21), et la commande de la connexion du troisième sous-ensemble de transmission (23) ou du quatrième sous-ensemble de transmission (24).

14. Procédé selon la revendication 13, dans lequel si l'instruction d'échappement est une instruction d'échappement pour l'ensemble de commande de frein (30), la commande de la connexion du premier sous-ensemble de transmission (21), et la commande de la connexion du troisième sous-ensemble de transmission (23) ou du quatrième sous-ensemble de transmission (24) comprend :
la commande de la connexion du premier sous-ensemble de transmission (21) et du troisième sous-ensemble de transmission (23), et la commande de la déconnexion du quatrième sous-ensemble de transmission (24).

15. Véhicule, comprenant un réservoir (01), un ensemble de frein (02) et le système de frein hydraulique selon l'une quelconque des revendications 1 à 10, dans lequel le réservoir (01) est configuré pour stocker du liquide de frein.
